# EUROPEAN PATENT APPLICATION

(11) **EP 4 821 856 A1**
(43) Date of publication of application: **14.10.2026**
(21) Application number: 26170219.5
(22) Date of filing: 01.04.2026
(51) Int. Cl.: B65H 31/20, B65H 33/08, B65H 43/02

(54) **PRINTING APPARATUS, CONTROL METHOD, AND CORRESPONDING PROGRAM**

(30) Priority: 08.04.2025 JP 2025063911
(71) Applicant: Canon Kabushiki Kaisha, Tokyo 146-8501 (JP)
(72) Inventor: SHIMAZAKI, Arashi, Tokyo (JP); YOSHIDA, Kenichi, Tokyo (JP); ODA, Yuichiro, Tokyo (JP); OKADA, Takanobu, Tokyo (JP); JO, To, Tokyo (JP)
(74) Representative: WESER & Kollegen Patentanwälte PartmbB

(57) **Abstract**

The present disclosure includes: a stacking unit (4) capable of stacking the print medium discharged, by use of a first stacking part (41) and a second stacking part (42) installed to be movable in a first direction relative to the first stacking part (41); a detection unit (74) capable of detecting a position of the second stacking part (42); and an acquisition unit (71) configured to control movement of the second stacking part (42) in the first direction and acquire the position of the second stacking part (42) based on a detection result obtained by the detection unit (74), wherein the acquisition unit (71) is configured to acquire the position of the second stacking part (42) at a start of printing by a printing unit (3), in accordance with the detection result obtained by the detection unit (74) while the second stacking part (42) is moved in the first direction.

## Description

### TECHNICAL FIELD

The present disclosure relates to a printing apparatus, a control method, and a program.

### BACKGROUND

There is a known technology in which, in a printing apparatus that discharges print media after printing and stacks them on a stacking part, the stacking part is moved to sort the print media into batches of a certain number of sheets. Japanese Patent Laid-Open No. 2015-160715 discloses a technology in which, while sorting print media, the stacking part is moved diagonally with respect to the conveyance direction, thereby ensuring an area where a bundle of print media to be sorted will not overlap with an already sorted bundle of print media.

In such a printing apparatus, there are cases where next printing is performed while a print medium discharged in previous printing remains in a stacking part. In this case, depending on the size of the print medium to be used in the next printing, there is a possibility that the stacked print medium is damaged by movement of the stacking part for sorting. Therefore, for example, it is conceivable to detect a position of the stacking part, using the technology disclosed in Japanese Patent Laid-Open No. 2015-113221 for detecting a position of the stacking part.

### SUMMARY

However, in the technology disclosed in Japanese Patent Laid-Open No. 2015-113221, while a sensor is used for detection of one of two positions, the other position is detected based on a load generated in a motor at the time the stacking part is brought into contact with another member. Therefore, in the technology disclosed in Japanese Patent Laid-Open No. 2015-113221, there is a possibility that a stacked print medium is damaged at the time of detecting that position of the stacking part.

The present disclosure is made in view of the above-mentioned problem, and provides a technology capable of detecting a position of a stacking part while preventing damage to stacked print media.

The present disclosure in its first aspect provides a printing apparatus as specified in claim 1. Optional features are specified in claims 2 to 8.

The present disclosure in its second aspect provides a control method as specified in claim 9.

The present disclosure in its third aspect provides a program as specified in claim 10.

According to the present disclosure, it is possible to detect a position of a stacking part while preventing damage to stacked print media.

Features of the present disclosure will become apparent from the following description of embodiments with reference to the attached drawings. The following description of embodiments is described by way of example.

### BRIEF DESCRIPTION OF THE DRAWINGS

Fig. 1 is a perspective view illustrating the internal configuration of a printing apparatus;
Fig. 2A and Fig. 2B are a front view and plan view of a printing part;
Fig. 3A and Fig. 3B are diagrams describing the conveyance system of the printing part;
Fig. 4 is a block configuration diagram focusing on the control system of a stacking part in the printing part;
Fig. 5 is a perspective configuration diagram of the stacking part;
Fig. 6A and Fig. 6B are diagrams describing the range of movement of a front tray;
Fig. 7A and Fig. 7B are diagrams describing the sorting positions of the stacking part;
Fig. 8A to Fig. 8C are diagrams each describing detection of a position of the front tray by a position detection part;
Fig. 9 is a perspective configuration diagram of a drive transmission part;
Fig. 10 is a perspective configuration diagram of a cam;
Fig. 11A to Fig. 11C are diagrams describing the movement of a reciprocating member using the cam;
Fig. 12 is a diagram describing how the stacking part is driven, depending on the rotation direction of a drive source;
Fig. 13 is a diagram showing a relation between Figs. 13A and 13B;
Figs. 13A and 13B are flowcharts illustrating details of processing of print processing;
Fig. 14 is a flowchart illustrating details of processing of a moving process, which is a subroutine of the print processing;
Fig. 15 is a flowchart illustrating details of processing of an acquisition process, which is a subroutine of the moving process;
Fig. 16 is a flowchart illustrating details of processing of a moving operation, which is a subroutine of the moving process;
Fig. 17A to Fig. 17D are diagrams each illustrating a state of the stacking part after being driven during the print processing;
Fig. 18 is a flowchart illustrating the details of processing of an acquisition process in another embodiment; and
Fig. 19 is a flowchart illustrating the details of processing of a moving operation in the said another embodiment.

### DESCRIPTION OF THE EMBODIMENTS

Hereinafter, with reference to the accompanying drawings, detailed descriptions are given of examples of an embodiment of the printing apparatus, control method, and program. Note that the following embodiments are not intended to limit the present disclosure, and every combination of the characteristics described in the present embodiments is not necessarily essential to the solution provided in the present disclosure. Further, the positions, shapes, etc., of the constituent elements described in the embodiments are merely examples and are not intended to limit the scope of this disclosure thereto.

In the present embodiments, as an example of the printing apparatus, a description is given of a multifunction peripheral that has a printing function for ejecting ink as a printing agent using an inkjet system to perform printing on a print medium and a reading function for reading a document placed on a platen glass. Note that the printing system is not limited to the inkjet system, and may be, for example, electrophotographic system or various other known systems. Printing agents that can be ejected by the printing apparatus according to the present embodiments are not limited to ink, and include various known printing agents used for printing, such as a processing liquid for applying a predetermined treatment to the ejected ink.

In the present specification, viewing from a position facing the side to which print media are discharged after printing, the direction from the left side toward the right side of the printing apparatus is described as the X direction, the direction from the rear side (the back side) toward the near side (the front side) of the printing apparatus is described as the Y direction, and the direction from the lower side toward the upper side of the printing apparatus is described as the Z direction. In this way, the X direction, Y direction, and Z direction are directions from one side toward the other side, and are orthogonal to one another. In the present specification, each direction is represented with a "+ (plus)" in a case where movement is from the one side toward the other side, and with a "- (minus)" in a case where movement is from the other side toward the one side, as appropriate.

### <<First Embodiment>>

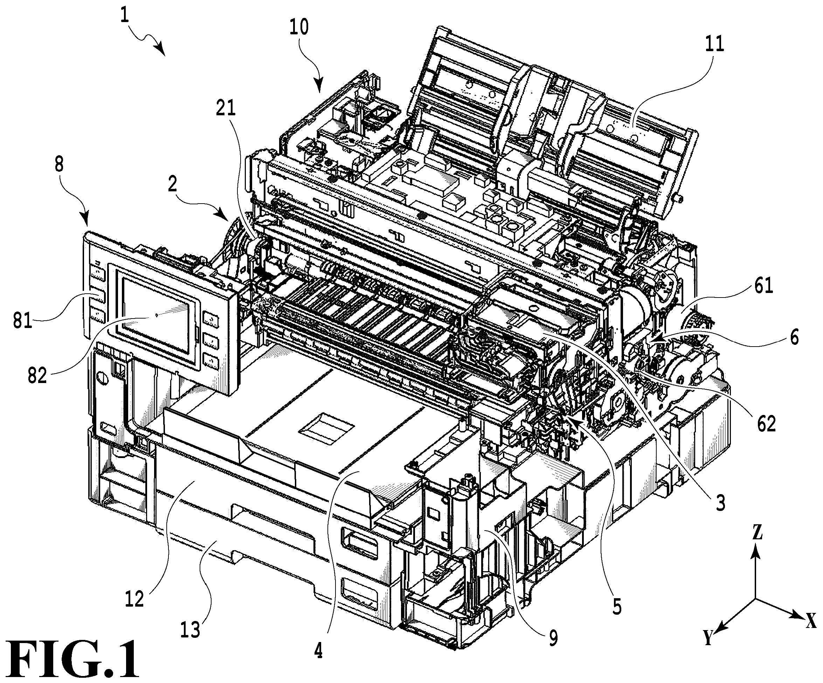

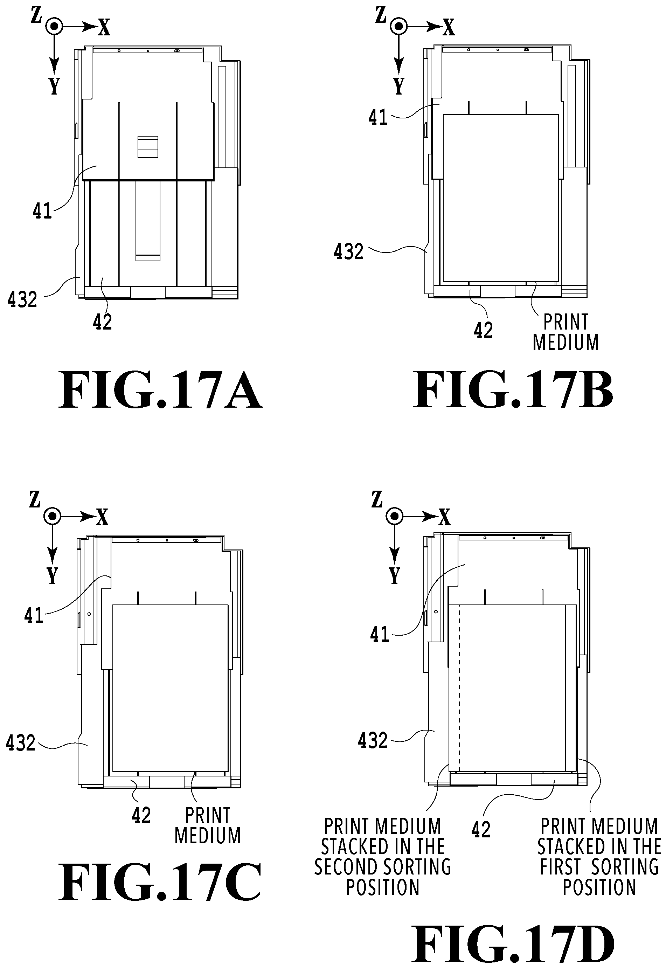

First, with reference to Fig. 1 to Fig. 17D, a description is given about the printing apparatus according to the first embodiment.

### (Configuration of the Printing Apparatus)

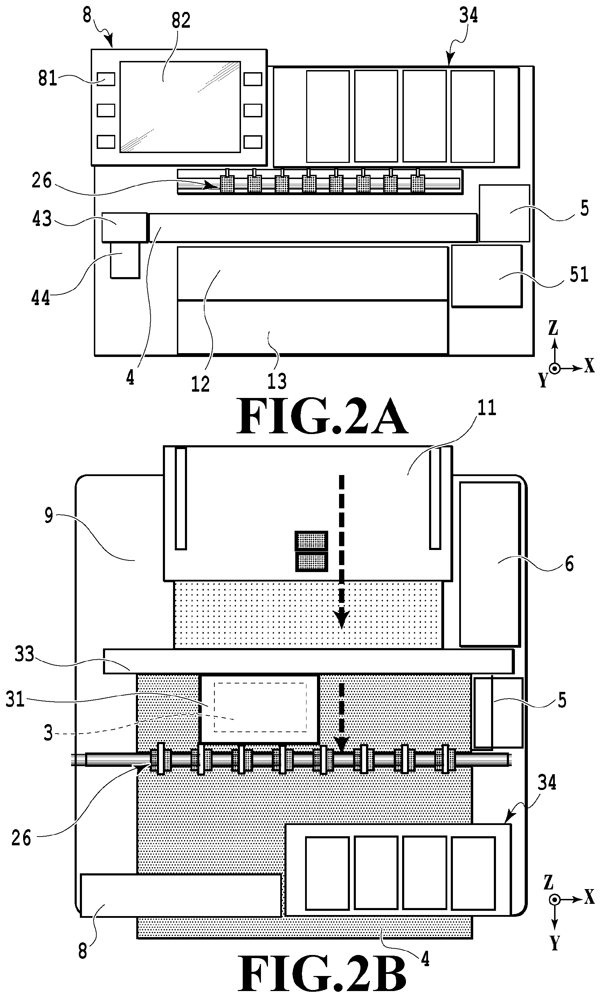

A description is given about the overall configuration of the printing apparatus according to the present embodiment. Fig. 1 is a perspective view of the internal configuration of the printing apparatus. Fig. 2A is a front view of a printing part, and Fig. 2B is a plan view of the printing part. Note that in Fig. 1, illustrations of some configurations are omitted for ease of understanding.

The printing apparatus 1 is a multifunction peripheral including the printing part 10 that performs printing on print media, and a scanner part (not illustrated in the drawings) arranged above the printing part 10 to read documents. In the printing apparatus 1, various processes related to a printing operation and reading operation are executed either individually or cooperatively by the printing part 10 and the scanner part.

The scanner part includes an ADF (automatic document feeder) and an FBS (flatbed scanner) and is capable of reading a document automatically fed by the ADF as well as reading a document placed on the platen glass of the FBS by the user. Note that although the printing apparatus 1 is a multifunction peripheral including the printing part 10 and the scanner part in the present embodiment, a form without the scanner part is also possible.

The printing part 10 includes the first paper feeding part 11, the second paper feeding part 12, and the third paper feeding part 13 for feeding print media (see Fig. 1). Further, the printing part 10 includes the conveyance part 2 that conveys print media fed from each paper feeding part, the print head 3 that performs printing by ejecting ink onto the print media conveyed by the conveyance part 2, and the stacking part 4 for stacking the print media after printing. Furthermore, the printing part 10 includes the maintenance part 5 that performs maintenance of the print head 3, and the drive part 6 that drives the first paper feeding part 11, the second paper feeding part 12, the third paper feeding part 13, and the maintenance part 5.

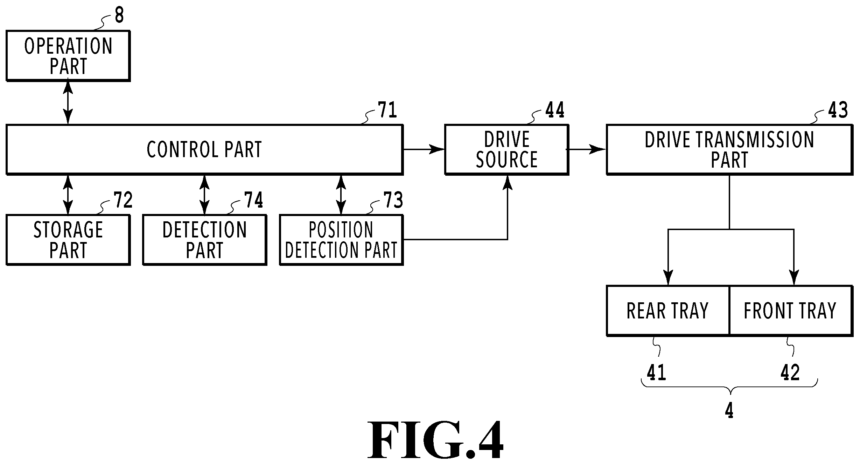

The printing part 10 includes the liquid storage part 34 for storing the ink to be supplied to the print head 3, and the ink discharge part 51 for storing the ink discharged from the maintenance part 5 (see Fig. 2A and Fig. 2B). Further, the printing part 10 includes the control part 71 (see Fig. 4) that controls the overall operation of the printing apparatus 1, such as the control of driving the conveyance part 2, the print head 3, the stacking part 4, and the drive part 6. Furthermore, the printing part 10 includes the operation part 8 capable of receiving input operations by the user and displaying various information. The operation part 8 is equipped with the operation button 81 for inputting operation information to the printing apparatus 1, and the display panel 82 for displaying operation information. In the printing apparatus 1, each of the above-described configurations is fastened to the housing 9 to constitute the printing part 10.

In the printing part 10, the operation part 8 and the liquid storage part 34 are arranged above the stacking part 4. More specifically, the operation part 8 and the liquid storage part 34 are each arranged at positions partially overlapping the stacking part 4 in the XY plane (see Fig. 2B). Note that the operation part 8 and the liquid storage part 34 are arranged with a space from the stacking part 4 in the Z direction (see Fig. 2A). In the present embodiment, the operation part 8 is arranged on one side (the left side) in the X direction, and the liquid storage part 34 is arranged on the other side (the right side) in the X direction. Note that it is also possible that the layout of the operation part 8 and the liquid storage part 34 in the X direction is reversed.

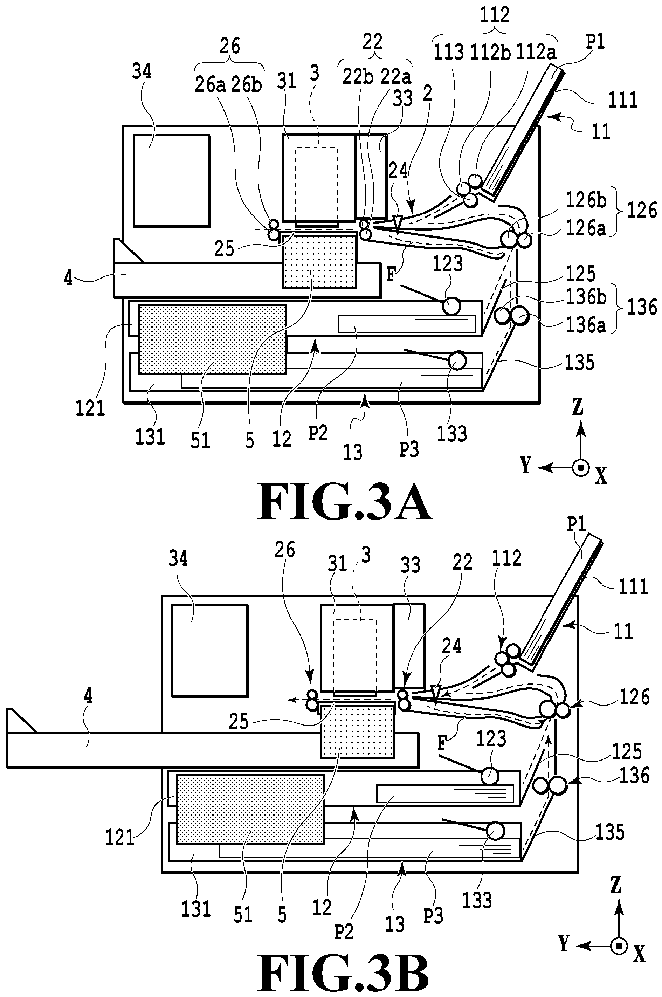

Further, in the printing part 10, the operation part 8 and the liquid storage part 34 are arranged on the other side in the Y direction (the front side) relative to the paper discharge roller pair 26, i.e., on the downstream side in the conveyance direction of print media to be discharged by the paper discharge roller pair 26. Additionally, in the printing part 10, the maintenance part 5 is arranged within the movement area of the print head 3, on the other side of the stacking part 4 in the X direction. More specifically, the maintenance part 5 is arranged at a position partially overlapping with the stacking part 4 in the YZ plane (see Fig. 3A). Furthermore, in the printing part 10, the ink discharge part 51 is arranged below the stacking part 4. More specifically, the ink discharge part 51 is arranged at a position partially overlapping with the stacking part 4 in the XY plane (see Fig. 2A and Fig. 3A).

### (Conveyance Part and Paper Feeding Part)

Next, a description is given about the configuration of the conveyance system of the printing part 10. Fig. 3A and Fig. 3B are diagrams illustrating the configuration of the conveyance system of the printing part 10, with Fig. 3A illustrating the state before the stacking part 4 expands, and Fig. 3B illustrating the state after the stacking part expands.

### <Conveyance Part>

The conveyance part 2 includes the conveyance roller pair 22 that conveys the print medium fed from each paper feeding part to the printing position where printing can be performed by the print head 3, and the paper discharge roller pair 26 that discharges the print medium after printing is performed by the print head 3. The conveyance roller pair 22 includes the conveyance roller 22a that is driven by the conveyance motor 21 (see Fig. 1), and the pinch roller 22b that is in pressure contact and associates with the conveyance roller 22a. At the conveyance roller pair 22, the print medium is nipped and conveyed by the conveyance roller 22a and the pinch roller 22b. The paper discharge roller pair 26 includes the paper discharge roller 26a that is driven by the conveyance motor 21, and the spur 26b that is in pressure contact with the paper discharge roller 26a. At the paper discharge roller pair 26, the print medium is nipped and conveyed by the paper discharge roller 26a and the spur 26b.

Further, the conveyance part 2 includes the first intermediate roller pair 126 that conveys the print media fed from the second paper feeding part 12 and the third paper feeding part 13 to the conveyance roller pair 22, and the second intermediate roller pair 136 that conveys the print medium fed from the third paper feeding part 13 to the first intermediate roller pair 126. The first intermediate roller pair 126 includes the first intermediate roller 126a that is driven by the drive part 6, and the first driven roller 126b that is in pressure contact and associates with the first intermediate roller 126a. At the first intermediate roller pair 126, the print medium is nipped and conveyed by the first intermediate roller 126a and the first driven roller 126b. Further, the second intermediate roller pair 136 includes the second intermediate roller 136a that is driven by the drive part 6, and the second driven roller 136b that is in pressure contact and associates with the second intermediate roller 136a. At the second intermediate roller pair 136, the print medium is nipped and conveyed by the second intermediate roller 136a and the second driven roller 136b.

Note that after the print medium fed from each paper feeding part passes through the detection lever 24 located on the upstream side of the conveyance direction relative to the conveyance roller pair 22, the positions of the left and right front edges of the print medium in the width direction are aligned with the conveyance direction by the conveyance roller pair 22. That is, the skew of the print medium in the conveyance direction is corrected by the conveyance roller pair 22.

### <Paper Feeding Part>

### =First Paper Feeding Part=

The first paper feeding part 11 includes the pressure plate 111 on which a print medium is placed, and the first paper feeding roller part 112 that feeds the print medium placed on the pressure plate 111 to the conveyance roller pair 22. The first paper feeding roller part 112 includes the first paper feeding rollers 112a and 112b that feed the print medium to the conveyance roller pair 22. Further, the first paper feeding roller part 112 includes the separation roller 113 that is arranged at a position opposed to the first paper feeding roller 112b and applies resistance to the print medium fed by the first paper feeding roller 112b. The first paper feeding rollers 112a and 112b are driven by the driving force of the driving motor 61 (see Fig. 1) of the drive part 6.

In the first paper feeding part 11, the print medium P1 stacked on the pressure plate 111 abuts on the first paper feeding roller 112a, which rotates under the driving of the driving motor 61, thereby starting the feeding of the print medium P1. The print medium P1 fed by the first paper feeding roller 112a is fed by the first paper feeding roller 112b, which is arranged on the downstream side in the feeding direction relative to the first paper feeding roller 112a. At this time, only the topmost sheet of the print media P1 fed by the first paper feeding roller 112b is fed to the conveyance roller pair 22 by the separation roller 113, which is arranged at the position opposed to the first paper feeding roller 112b.

### =Second Paper Feeding Part=

The second paper feeding part 12 includes the cassette case 121 that accommodates a print medium, the second paper feeding roller 123 that feeds the print medium accommodated in the cassette case 121, and the separation part 125 that applies resistance to the print medium fed by the second paper feeding roller 123. The second paper feeding roller 123 is driven by the driving force of the driving motor 62 of the drive part 6 (see Fig. 1) transmitted through a gear train (not illustrated in the drawings).

In the second paper feeding part 12, upon driving of the driving motor 62, the second paper feeding roller 123 rotates while abutting on the print medium P2 accommodated in the cassette case 121, thereby starting the feeding of the print medium P2 to the first intermediate roller pair 126. To the print medium P2 fed by the second paper feeding roller 123, resistance against the feeding direction is applied by the separation part 125. Accordingly, even if multiple print media P2 are fed by the second paper feeding roller 123, only the topmost sheet of the print media P2 is fed to the first intermediate roller pair 126 by the separation part 125. The print medium P2 fed to the first intermediate roller pair 126 is conveyed to the conveyance roller pair 22 by the first intermediate roller pair 126.

### =Third Paper Feeding Part=

The third paper feeding part 13 includes the cassette case 131 that accommodates a print medium, the third paper feeding roller 133 that feeds the print medium accommodated in the cassette case 131, and the separation part 135 that applies resistance to the print medium fed by the third paper feeding roller 133. The third paper feeding roller 133 is driven by the driving force of the driving motor 62 of the drive part 6 (see Fig. 1) transmitted through a gear train (not illustrated in the drawings).

In the third paper feeding part 13, upon driving of the driving motor 62, the third paper feeding roller 133 rotates while abutting on the print medium P3 accommodated in the cassette case 131, thereby starting the feeding of the print medium P3 to the second intermediate roller pair 136. To the print medium P3 fed by the third paper feeding roller 133, resistance against the feeding direction is applied by the separation part 135. Accordingly, even if multiple print media P3 are fed by the third paper feeding roller 133, only the topmost sheet of the print media P3 is fed to the second intermediate roller pair 136 by the separation part 135. The print medium P3 fed to the second intermediate roller pair 136 is conveyed to the conveyance roller pair 22 by the second intermediate roller pair 136 and the first intermediate roller pair 126.

### (Print Head)

Next, a description is given about the print head 3. In the printing part 10, the print head 3 is supported in a slidable manner on the chassis 33 extending in the X direction, and is mounted on the carriage 31 configured to be capable of reciprocal movement in the X direction (see Fig. 2B and Fig. 3A). Accordingly, the print head 3 is able to move reciprocally in the X direction via the carriage 31. The print medium conveyed by the conveyance roller pair 22 is supported by the platen 25 placed at the position opposed to the print head 3. Further, while moving in the X direction via the carriage 31, the print head 3 ejects ink onto the print medium supported by the platen 25 to perform printing.

In a case where printing is performed only on one side of the print medium, the print medium after printing is discharged to the stacking part 4 via the paper discharge roller pair 26. On the other hand, in a case where printing is performed on both sides of the print medium, the conveyance motor 21 is rotated in the reverse direction with the rear edge of the print medium, after printing on one side, being nipped by the paper discharge roller pair 26. Accordingly, the paper discharge roller pair 26 and the conveyance roller pair 22 rotate in the direction opposite to the rotation for conveying the print medium in the conveyance direction, so as to convey the print medium nipped at the rear edge by the paper discharge roller pair 26 to the reversal conveying path F. In the description provided herein, it is assumed that the rear edge of a print medium refers to the rear edge of a print medium in the conveyance direction (+Y direction), and the front edge of a print medium refers to the front edge of a print medium in the conveyance direction.

Then, once the front edge of the print medium conveyed to the reversal conveying path F passes through the conveyance roller pair 22, the conveyance motor 21 is switched to forward rotation. After that, upon passing through the detection lever 24 due to conveyance by the first intermediate roller pair 126, skew correction is performed again by the conveyance roller pair 22. Subsequently, the same operation as that for printing on one side of the print medium is performed, so that after printing on the other side of the print medium, the print medium printed on both sides is discharged to the stacking part 4 by the paper discharge roller pair 26.

Note that, although details are described later, in the present embodiment, the stacking part 4 where the print media discharged via the paper discharge roller pair 26 are stacked automatically expands in the +Y direction during printing (see Fig. 3B). Accordingly, the stacking part 4, most of which is inside the housing 9 before expansion, protrudes outside the housing 9, thereby ensuring the area to stably stack the discharged print media. Note that the stacking part 4 is detachable from the housing 9. By removing the stacking part 4 from the housing 9, the user can insert their hand into the housing 9 to remove a jammed print medium in the conveyance path.

### (Stacking Part)

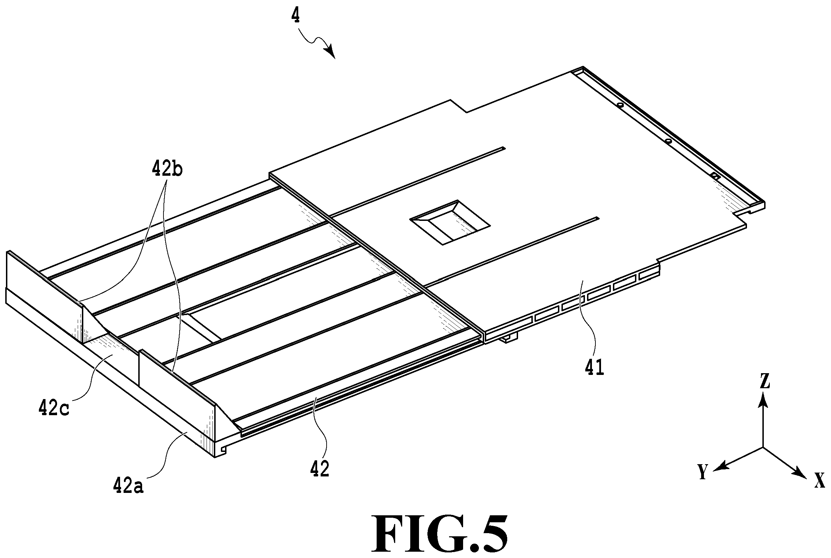

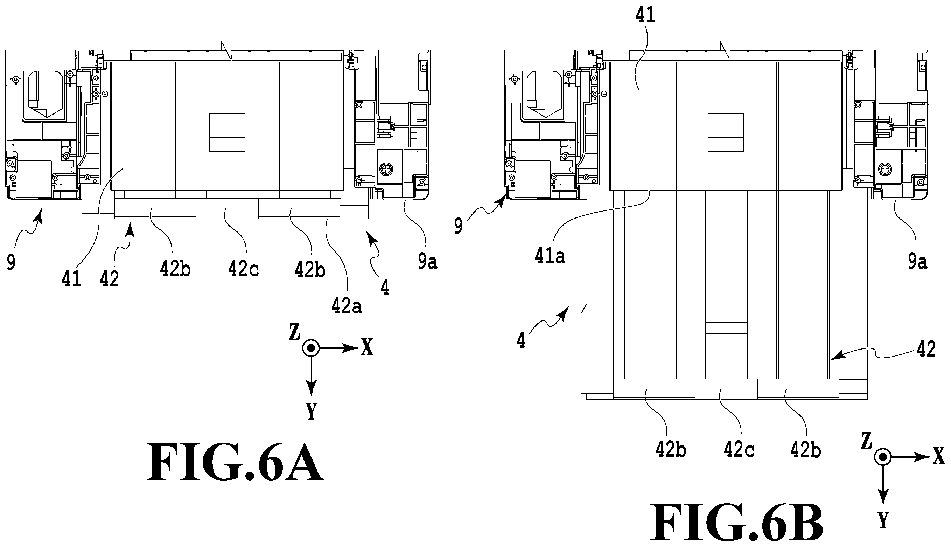

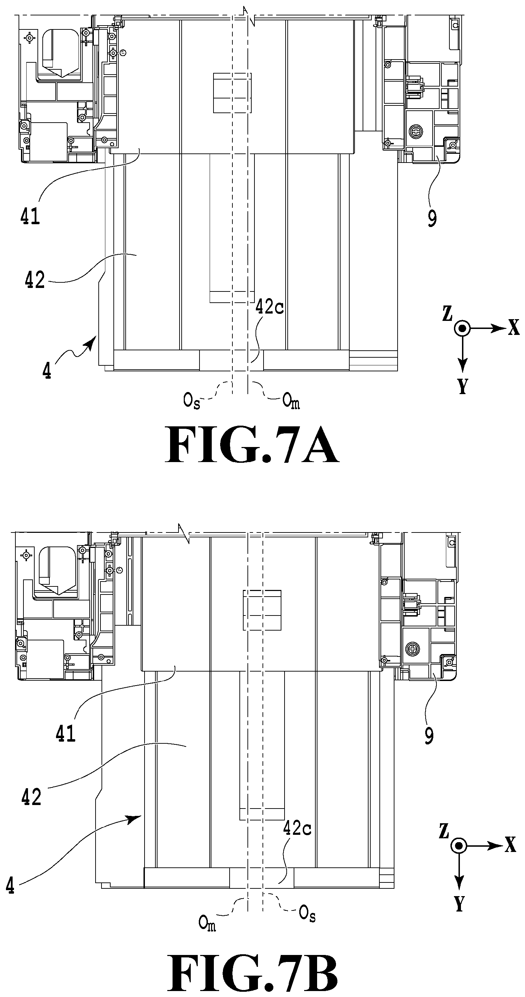

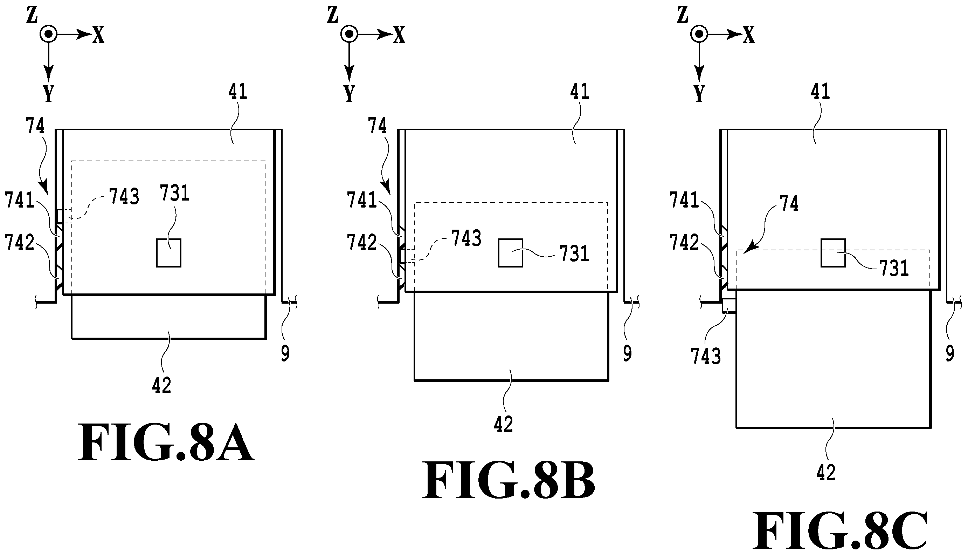

Next, a description is given about the stacking part 4. Fig. 4 is a block diagram illustrating the configuration of the control system of the printing apparatus 1. Note that, to focus on the stacking part 4 in the following description, the control configuration related to the stacking part 4 is mainly illustrated in Fig. 4, and other configurations are omitted. Fig. 5 is a perspective configuration diagram of the stacking part 4. Fig. 6A and Fig. 6B are diagrams illustrating the positions of the stacking part 4 after expansion and after contraction, with Fig. 6A illustrating the accommodated position of the front tray 42 after the stacking part 4 contracts, and Fig. 6B illustrating the stack position of the front tray 42 after the stacking part 4 expands. Fig. 7A and Fig. 7B are diagrams illustrating two sorting positions of the stacking part 4, with Fig. 7A illustrating the first sorting position, and Fig. 7B illustrating the second sorting position. Fig. 8A to Fig. 8C are diagrams each describing detection of a position of the front tray 42 by a position detection part. Fig. 8A is a diagram illustrating a state in which the front tray 42 is positioned near the accommodated position. Fig. 8B is a diagram illustrating a state in which the front tray 42 is positioned near a predetermined position. Fig. 8C is a diagram illustrating a state in which the front tray 42 is positioned near the maximum stack position.

The stacking part 4 for stacking the print media discharged by the paper discharge roller pair 26 automatically expands upon the start of printing, thereby expanding the area that supports the discharged print media. Further, upon removal of the print media from the stacking part 4, the stacking part 4 automatically contracts, thereby reducing that area. Furthermore, the stacking part 4 has a function to move in a direction (the X direction) intersecting (orthogonally in the present embodiment) with the expansion and contraction direction (the Y direction) to sort the discharged print media. Note that the automatic contraction of the stacking part 4 in the printing part 10 is executed not only upon removal of the print media from the stacking part 4 but also upon receiving an instruction from the user via the operation part 8, upon absence of a printing operation for a predetermined time, upon switching to a low power mode, or the like.

The printing part 10 includes the control part 71, the storage part 72, the detection part 73, the position detection part 74, the operation part 8, the stacking part 4, the drive transmission part 43, and the drive source 44 (see Fig. 4).

During the time after receiving a printing command until the print medium is conveyed and discharged onto the stacking part 4, the control part 71 controls the stacking part 4 to complete the movement in the X direction and the expansion in the Y direction. Further, if the print media are removed from the stacking part 4, the control part 71 controls the stacking part 4 to start moving in the X direction and contracting in the Y direction. Although details are described later, the stacking part 4 is expanded after moving in the X direction to the first sorting position (which is described later). In the expansion of the stacking part 4, the front tray 42 that constitutes the stacking part 4 moves from the accommodated position (which is described later) to the stack position (which is described later). Further, the stacking part 4 is contracted after moving in the X direction to the second sorting position (which is described later) that is different from the first sorting position. In the contraction of the stacking part 4, the front tray 42 that constitutes the stacking part 4 moves from the stack position to the accommodated position. With this control, during discharge of a print medium, it is possible to reduce the influence of external force imposed on print media due to the movement of the stacking part 4. That is, it is possible to suppress deterioration in the alignment of the print media discharged and stacked, and thus while sorting print media, the visibility of the sorted print media is improved. Further, since the stacking part 4 automatically expands and contracts, there is no burden on the user, enhancing usability. Note that details of the driving control for the movement and expansion of the stacking part 4 by the control part 71 are described later.

The operation part 8 includes the operation button 81 and the display panel 82 (see Fig. 1). By operating the operation part 8, the user can select whether or not sorting of print media is required and can issue an instruction for moving the stacking part 4. Note that, in the printing part 10, sorting of print media and movement of the stacking part 4 can also be executed based on information set in a job, for example. The storage part 72 stores various programs to be used for operating the stacking part 4. Upon input from the user through the operation part 8, the control part 71 reads the program corresponding to the input result, and performs control of driving the stacking part 4. Further, the storage part 72 stores detection results obtained by the detection part 73 and the position detection part 74.

The detection part 73 includes multiple sensors. Specifically, a sensor that detects the rotation of the drive source 44 (see Fig. 2A) for driving the stacking part 4 is included. The sensor is configured with a rotary encoder and is installed on the rotary axis of the drive source 44 that generates a rotational driving force. The sensor converts the rotational angle of the drive source 44 into a number of steps and transmits it to the control part 71. The control part 71 reads, from the storage part 72, the number of steps required for a predetermined operation of the stacking part 4, and in a case where the number of steps transmitted from the sensor reaches the specified number of steps, the control part 71 determines that the predetermined operation of the stacking part 4 is completed and stops the drive source 44. In the present embodiment, the sensor is configured with an encoder installed on the rotary axis of the drive source 44; however, there is no such limitation. For example, installation on the rotary axis of a predetermined transmission member that constitutes the drive transmission part 43 (see Fig. 2A), which transmits the driving force of the drive source 44 to the stacking part 4, is also possible.

Further, the detection part 73 includes a sensor that detects the position of the stacking part 4 after the predetermined operation. As this sensor, for example, a mechanical switch, a photo sensor, the rotary encoder of the drive source 44, or the like may be used. Furthermore, the detection part 73 includes the sensor 731 (see Fig. 8A) that detects whether or not any print medium is stacked on the stacking part 4. With the sensor 731, it is possible to detect the timing to contract the stacking part 4.

The stacking part 4 includes the rear tray 41 and the front tray 42 (see Fig. 5). The rear tray 41 is configured to be capable of reciprocal movement in the X direction, which intersects with the direction (the Y direction) in which print media are discharged. The rear tray 41 is arranged within the housing 9, and the other end portion 41a in the Y direction is arranged further back in the Y direction relative to the front surface 9a of the housing 9 (see Fig. 6B).

The front tray 42 is supported by the rear tray 41 and is configured to be capable of reciprocally moving in the Y direction in the rear tray 41. Accordingly, the front tray 42 is able to reciprocally move in the X direction via the rear tray 41. The front tray 42 includes, at the end portion 42a on the other side in the Y direction, the protrusion portions 42b that protrude upward (+Z direction). The protrusion portions 42b extend in the X direction, and the notch portion 42c is formed at the central portion therebetween. With the protrusion portions 42b, it is possible to restrict the movement in the +Y direction of the print media to be stacked. Further, the notch portion 42c makes it easier for the user to grip the stacked print media.

The front tray 42 is configured to be movable between the accommodated position and the stack position (see Fig. 6A and Fig. 6B). The accommodated position is such that most of the front tray 42 overlaps with the rear tray 41 in the XY plane and is accommodated below the rear tray 41 (see Fig. 6A). The stack position is a position drawn out from the accommodated position so that the front tray 42 cooperates with the rear tray 41 to be able to stack print media (see Fig. 6B). That is, at the time the stacking part 4 expands, the front tray 42 moves in the +Y direction from the accommodated position to the stack position. Further, at the time the stacking part 4 contracts, the front tray 42 moves in the -Y direction from the stack position to the accommodated position. Note that in the present embodiment, in the accommodated position, a partial area on the end portion 42a side of the front tray 42 protrudes in the Y direction relative to the front surface 9a of the housing 9. With this configuration, at the time the front tray 42 is in the accommodated position, most of the stacking part 4 is positioned inside the housing 9, thereby reducing the installation space of the printing apparatus 1.

Regarding the stack position, multiple different positions can be taken in the Y direction according to the size of the print media. In the present embodiment, as the stack position, four stack positions corresponding to A4, A5, B5, and LETTER sizes, respectively, can be taken. Note that the positions that can be taken as the stack position are not limited to these.

Further, by the movement of the rear tray 41 in the X direction, the stacking part 4 is configured to be movable between two sorting positions for sorting the print media to be discharged. That is, in the X direction, the stacking part 4 can move between the first sorting position where the center position Os of the stacking part 4 is positioned on one side of the center position Om of the print media to be discharged (see Fig. 7A) and the second sorting position where the center position Os is positioned on the other side of the center position Om (see Fig. 7B). The stacking part 4 is configured to be capable of sorting the print media to be discharged at the positions offset from each other in the X direction by stacking the print media at the first sorting position and stacking the print media at the second sorting position. In other words, the first sorting position and the second sorting position are positioned a predetermined distance apart from each other in the X direction.

In the present embodiment, the distance from the center position Os to the center position Om at the first sorting position may be designed to match the distance from the center position Os to the center position Om at the second sorting position. Alternatively, it is also possible that the distance from the center position Os to the center position Om at the first sorting position is designed to differ from the distance from the center position Os to the center position Om at the second sorting position. The distance required for sorting, i.e., the distance between the first sorting position and the second sorting position, is set to be, for example, 30 mm or more and 50 mm or less. The positions where the stacking part 4 can stay are not limited to the first sorting position and the second sorting position. For example, it is also possible to adopt a configuration in which the stacking part 4 is positioned at the center position Om in a case where sorting is not performed during print processing, in a case where printing is not performed, or the like.

The position detection part 74 is configured to be capable of detecting a position of the front tray 42. Specifically, the position detection part 74 includes the trigger member 743 formed at a side surface of the front tray 42 so as to protrude in the X direction. In the present embodiment, the trigger member 743 is formed at the side surface on one side (the left side) in the X direction of the front tray 42 so as to protrude toward the left side. Note that, in the present embodiment, the trigger member 743 is formed on the front tray 42; however, there is no such limitation, and the trigger member 743 may be formed on the support member 432 (described later), which supports the front tray 42 so as to be movable in the Y direction.

In the housing 9, the position detection part 74 includes the sensor 741 and the sensor 742 installed at positions where the sensor 741 and the sensor 742 can make contact with the trigger member 743 while the front tray 42 moves in the Y direction. The sensor 741 and the sensor 742 are arranged along the Y direction, at positions that overlap with the trigger member 743 in the X direction and the Z direction. The sensor 741 is arranged on the upstream side in the +Y direction relative to the sensor 742. The sensor 742 is arranged with a spacing from the sensor 741, on the downstream side in the +Y direction relative to the sensor 741.

The sensors 741 and 742 are configured not to interfere with movement of the front tray 42 in the +Y direction while detecting the trigger member 743, and are configured not to cause (or to hardly cause) movement of the front tray 42 in the X direction. In the present embodiment, the sensors 741 and 742 are configured as mechanical switches that detect the trigger member 743 by being contacted by the trigger member 743. Note that the configuration of the sensors 741 and 742 is not limited thereto; for example, various known technologies capable of detecting the trigger member 743 while satisfying the above-described conditions, such as photo sensors, can be used.

In detection of a position of the front tray 42 executed by the control part 71 using the position detection part 74, a position of the front tray 42 is detected based on presence or absence of detection of the trigger member 743 by the sensors 741 and 742 while the front tray 42 is moved in the +Y direction. For example, in a case where the trigger member 743 is first detected by the sensor 741 while the front tray 42 is moved in the +Y direction, the control part 71 determines that the front tray 42 is located at or near the accommodated position (see Fig. 8A).

Further, in a case where the trigger member 743 is first detected by the sensor 742 while the front tray 42 is moved in the +Y direction, the control part 71 determines that the front tray 42 is located at or near a predetermined position, at which the front tray 42 is extended from the accommodated position by a predetermined amount (see Fig. 8B). Furthermore, in a case where the trigger member 743 is not detected by the sensors 741 and 742 while the front tray 42 is moved in the +Y direction, the control part 71 determines that the front tray 42 has moved to the maximum position up to which the front tray 42 is movable, and has come into contact with a stopper portion of the rear tray 41 and stopped (see Fig. 8C). The maximum position is, for example, the position at which the front tray 42 is located at the time of stacking a print medium of the maximum size printable by the printing part 10.

### (Drive Transmission Part)

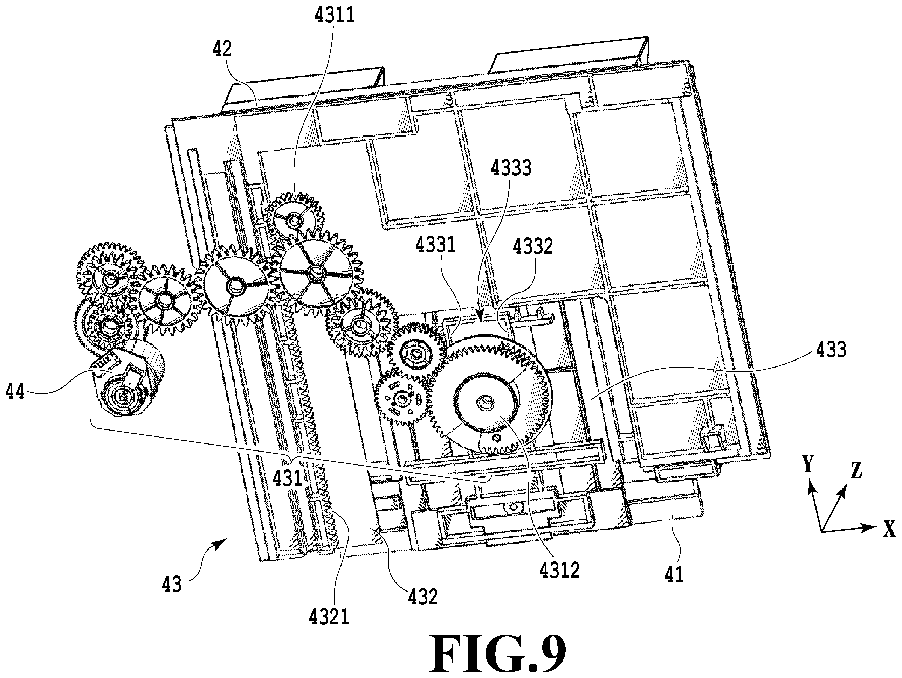

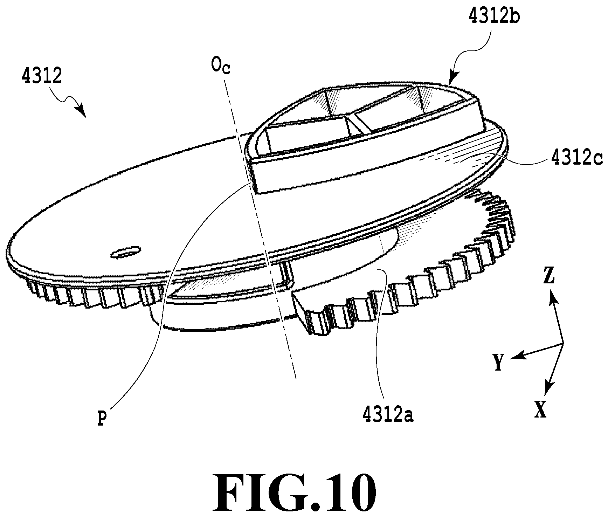

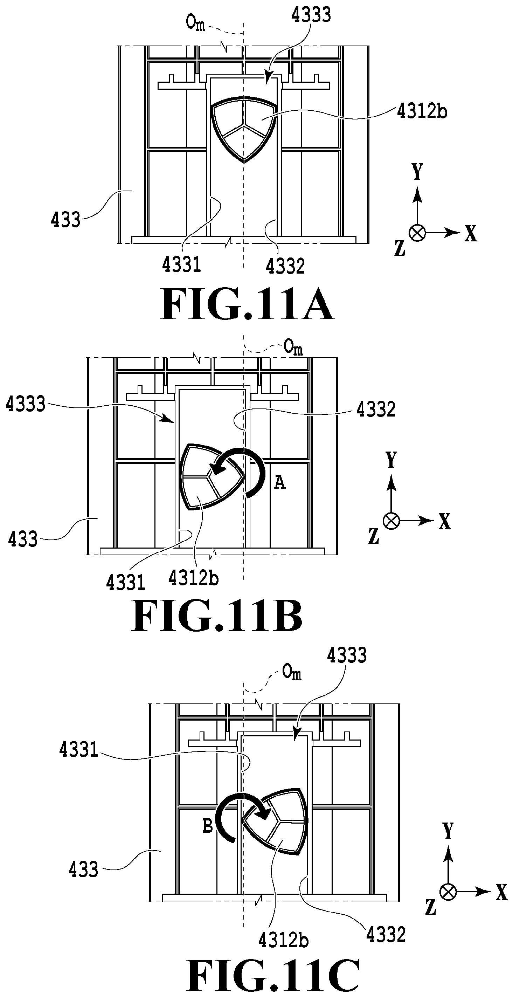

Next, a description is given about the drive transmission part 43. Fig. 9 is a perspective view of the drive transmission part 43. Fig. 10 is a perspective view of the cam, which is a constituent member of the drive transmission part 43. Fig. 11A to Fig. 11C are diagrams describing the movement of the stacking part 4 in the X direction using the cam.

The drive transmission part 43 includes the drive train 431, which is composed of multiple drive transmission members that transmit the rotational driving force from the drive source 44, and the support member 432, which can move in the Y direction by the driving force transmitted via the drive train 431 (see Fig. 9). Further, the drive transmission part 43 includes the reciprocating member 433, which is capable of moving in the X direction by the driving force transmitted via the drive train 431, and a casing (not illustrated in the drawings), which holds the drive source 44 and the drive train 431.

The support member 432 includes the rack part 4321 that extends in the Y direction. This rack part 4321 meshes with the pinion 4311, which is one of the drive transmission members that constitute the drive train 431, thereby allowing the support member 432 to move in the Y direction by the driving force transmitted from the drive train 431. Specifically, the drive train 431 is composed of multiple gears, including the pinion 4311. The driving force transmitted from the drive source 44 is transmitted to the pinion 4311 via a predetermined gear in the drive train 431, causing the support member 432 to move in the Y direction due to the driving force transmitted to the pinion 4311.

One end of the drive train 431 is connected to the drive source 44. Further, at the other end of the drive train 431, the cam 4312 that engages with the reciprocating member 433 is positioned. The cam 4312 includes the circular plate part 4312c, the gear part 4312a formed on one surface of the plate part 4312c, and the cam part 4312b formed on the other surface of the plate part 4312c (see Fig. 10). The driving force from the drive source 44 is transmitted to the gear part 4312a, thereby causing the cam 4312 to rotate about the rotational center, which is the axis Oc that passes through the center of the plate part 4312c and is parallel to the Z direction. In the present embodiment, the cam part 4312b has a substantially triangular cylindrical shape, and each side connecting adjacent vertices of the triangle is gently curved to protrude outward (see Fig. 11A). Further, the cam part 4312b is formed on the other surface of the plate part 4312c eccentrically with respect to the rotational center such that the predetermined vertex P is positioned on the axis Oc.

The reciprocating member 433 has the engagement part 4333 formed to engage with the cam part 4312b. The engagement part 4333 has the first sliding surface 4331 and the second sliding surface 4332 formed so as to face each other with a predetermined spacing in the X direction such that the engaging cam part 4312b can slide therein. Note that the predetermined spacing corresponds to the length of the cam part 4312b in the X direction. Further, the first sliding surface 4331 and the second sliding surface 4332 are formed parallel to the Y direction. As mentioned above, the cam part 4312b is eccentric with respect to the rotational center of the cam 4312. Accordingly, if the cam 4312 rotates, the cam part 4312b slides on the first sliding surface 4331 or the second sliding surface 4332, thereby moving the reciprocating member 433 in the +X direction or -X direction (see Figs. 11A to 11C).

For example, assume that, by a rotation of the cam 4312, the cam part 4312b has rotated from a predetermined position (the position illustrated in Fig. 11A) in the direction of arrow A (see Fig. 11B). In this case, the cam part 4312b slides on the first sliding surface 4331, thereby moving the reciprocating member 433 to one side (the -X direction) from the other side in the X direction (see Fig. 11B). Further, assume that, by a rotation of the cam 4312, the cam part 4312b has rotated from a predetermined position in the direction of arrow B (see Fig. 11C). In this case, the cam part 4312b slides on the second sliding surface 4332, thereby moving the reciprocating member 433 from one side to the other side (+X direction) in the X direction (see Fig. 11C).

The support member 432 is connected to the front tray 42 and supports the front tray 42. Therefore, in conjunction with the movement of the support member 432 in the Y direction, the front tray 42 moves in the Y direction. Further, the reciprocating member 433 is connected to the rear tray 41 and is supported by the rear tray 41. Therefore, in conjunction with the movement of the reciprocating member 433 in the X direction, the rear tray 41 moves in the X direction, and the front tray 42 also moves in the X direction via the rear tray 41. In the present embodiment, the support member 432 is connected to the front tray 42 and the reciprocating member 433 is connected to the rear tray 41; however there is no such limitation. For example, the rack part 4321 may be formed on the front tray 42, allowing the front tray 42 to have the function of the support member 432, or the engagement part 4333 may be formed on the rear tray 41, allowing the rear tray 41 to have the function of the engagement part 4333.

### (Overview of the Movements of the Rear Tray and the Front Tray)

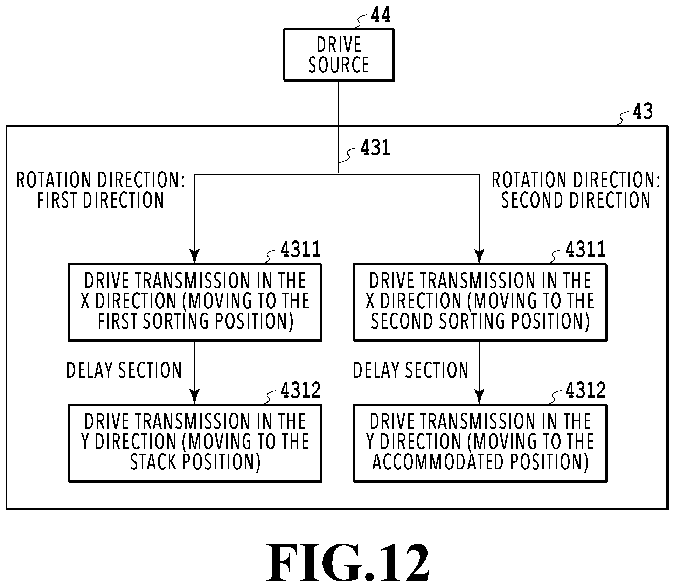

Next, a description is given about an overview of the movements of the rear tray 41 and the front tray 42. Fig. 12 is a diagram illustrating an overview of the movements of the rear tray 41 and the front tray 42.

In the drive train 431, a delay section is formed in the drive transmission path for the Y direction. Specifically, the drive train 431 is configured to start the movement of the front tray 42 in the Y direction after the movement of the rear tray 41 in the X direction is completed. More specifically, in a case where the rotation direction of the drive source 44 is in the first direction, the rear tray 41 is moved to the first sorting position, and the front tray 42 is also moved to the first sorting position via the rear tray 41. Subsequently, the drive source 44 is further rotated in the first direction, thereby expanding the front tray 42 relative to the rear tray 41, that is, the front tray 42 in the accommodated position is moved in the +Y direction to the stack position. In a case where the rotation direction of the drive source 44 is the second direction, which is opposite to the first direction, the rear tray 41 is moved to the second sorting position, and the front tray 42 is also moved to the second sorting position via the rear tray 41. Subsequently, the drive source 44 is further rotated in the second direction, thereby contracting the front tray 42 relative to the rear tray 41, that is, the front tray 42 in the stack position is moved in the -Y direction to the accommodated position.

In the present embodiment, the drive transmission part 43 moves the front tray 42 in the Y direction after moving the rear tray 41 in the X direction; however, there is no such limitation. For example, it is also possible to move the rear tray 41 in the X direction after moving the front tray 42 in the Y direction. Further, movement of the stacking part 4 by the drive transmission part 43, that is, movement of the rear tray 41 to the first sorting position and the second sorting position, and movement of the front tray 42 to the accommodated position and the stack position are not limited to the above-described specifications. For example, the movement of the stacking part 4 may be executable by the rotation in the first direction or in the second direction. Furthermore, various known transmission mechanisms, such as a link mechanism, may be used as a configuration for transmitting the driving force of the drive source 44. Furthermore, the printing part 10 may include multiple drive sources, so that the movement of the rear tray 41 in the X direction and the movement of the front tray 42 in the Y direction are executed by the driving force from different drive sources. Note that the movement of the rear tray 41 in the X direction and the movement of the front tray 42 in the Y direction may be executed not only by the drive source 44 but also manually by the user.

### (Concerns Arising from Known Technologies)

In the above configuration, in a case where a job is input to the printing apparatus 1, the print processing for executing printing based on the job is executed. In the print processing, based on various kinds of information set in the job, ink is ejected from the print head 3 to perform printing on the print medium conveyed by the conveyance part 2, and sorting of the print medium discharged (fed out) to the stacking part 4 after printing is performed.

Note that the printing apparatus 1 is configured such that, in a case where it is determined based on a detection result of the sensor 731 that the print medium has been removed from the stacking part 4, the stacking part 4 is automatically contracted, that is, the front tray 42 is moved from the stack position to the accommodated position. However, depending on a manner of use by the user, printing based on a next job is executed without removing the print medium from the stacking part 4. In this case, depending on the size of the print medium to be used in the printing based on the next job, the stacking part 4 on which the print medium is stacked is contracted.

That is, the printing apparatus 1 is configured such that, at the start of printing, the front tray 42 of the stacking part 4 is moved in the Y direction to a position corresponding to the size of the print medium set in the job. Therefore, in a case where the size of the print medium to be used in the printing based on the next job is smaller than the size of the print medium stacked in the stacking part 4, the front tray 42 is moved in the -Y direction. In this case, with movement of the front tray 42 in the -Y direction, the print medium stacked in the stacking part 4 may be damaged by being pinched between the protrusion portions 42b and a wall surface formed on the upstream side in the +Y direction of the stacking part 4.

For this reason, it is conceivable, for example, that a position of the front tray 42 is detected using the technology of Japanese Patent Laid-Open No. 2015-113221, and movement of the front tray 42 in the Y direction is controlled based on the detection result. However, in the technology disclosed in Japanese Patent Laid-Open No. 2015-113221, a sensor is installed for detection of one of two positions, whereas the other position is detected based on a load generated in a motor at the time the stacking part is brought into contact with another member. For this reason, in a case where the technology disclosed in Japanese Patent Laid-Open No. 2015-113221 is used for detection of a position of the front tray 42, it is necessary to move the front tray 42 in the -Y direction, which causes the print medium stacked on the stacking part 4 to be pinched between the protrusion portions 42b and the above-described wall surface, resulting in damage to the print medium.

### (Print Processing)

Therefore, in the present embodiment, while the front tray 42 is moved in the stacking part 4 at the start of printing, the position of the front tray 42 is detected by the position detection part 74, and, in accordance with this detection result, movement of the front tray 42 to a stack position corresponding to the size of a print medium is executed. Hereinafter, a description is given about the print processing executed by the printing apparatus 1 according to the present embodiment.

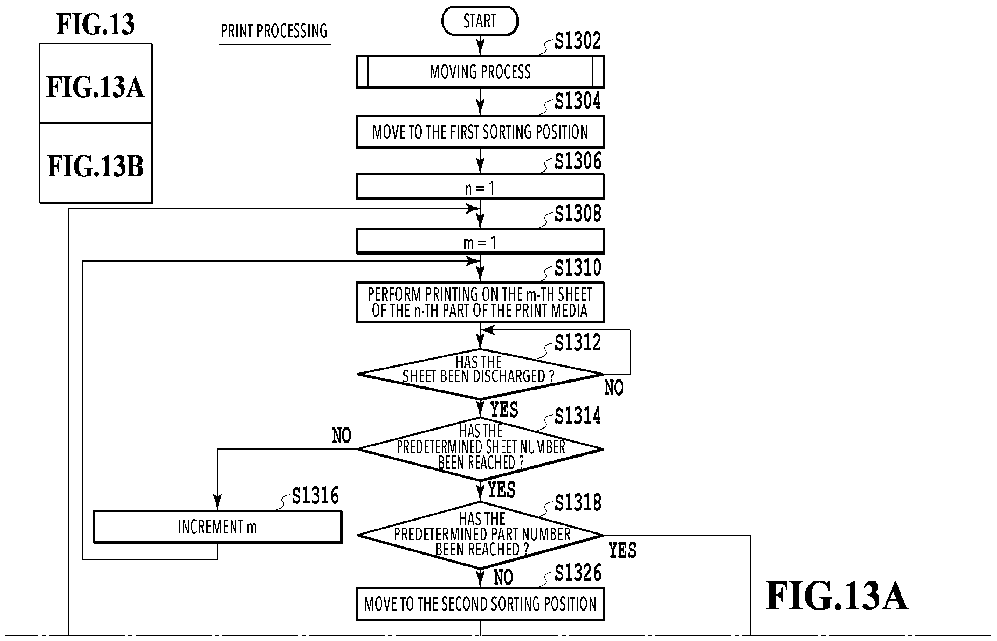

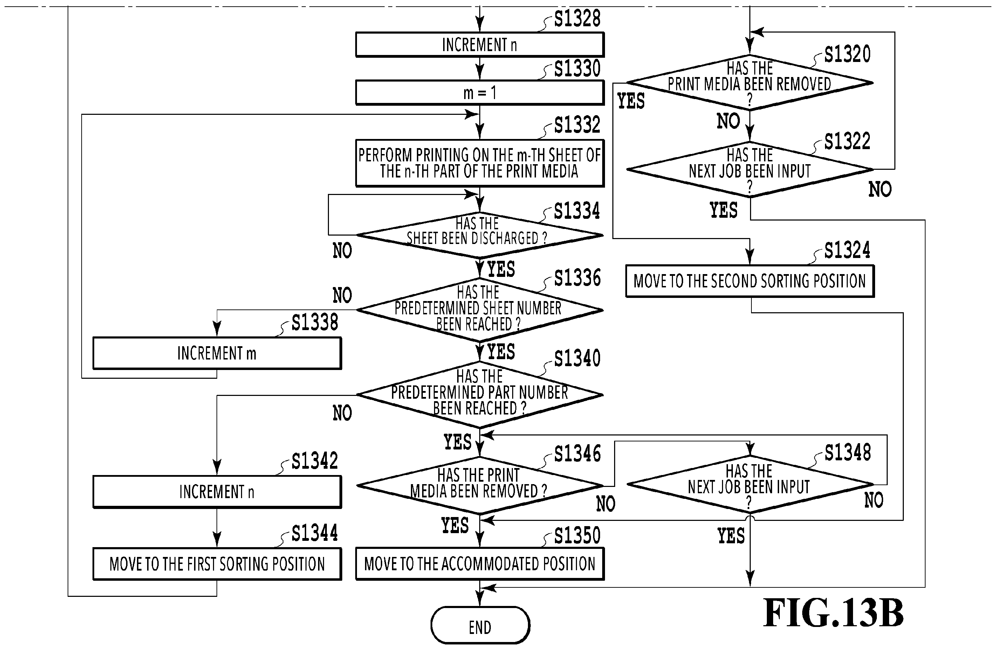

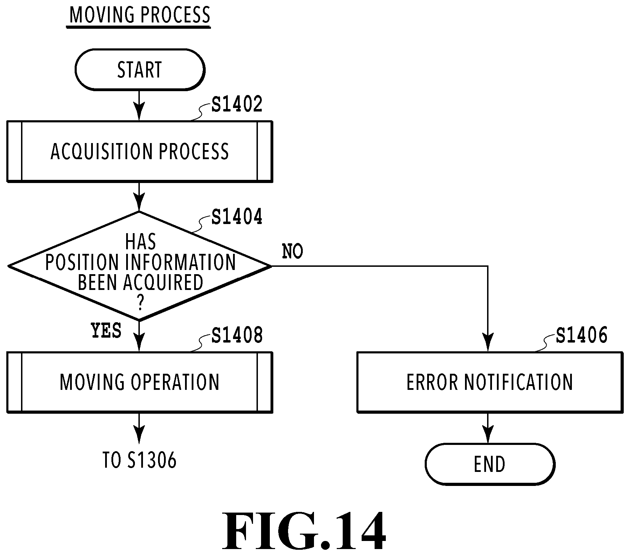

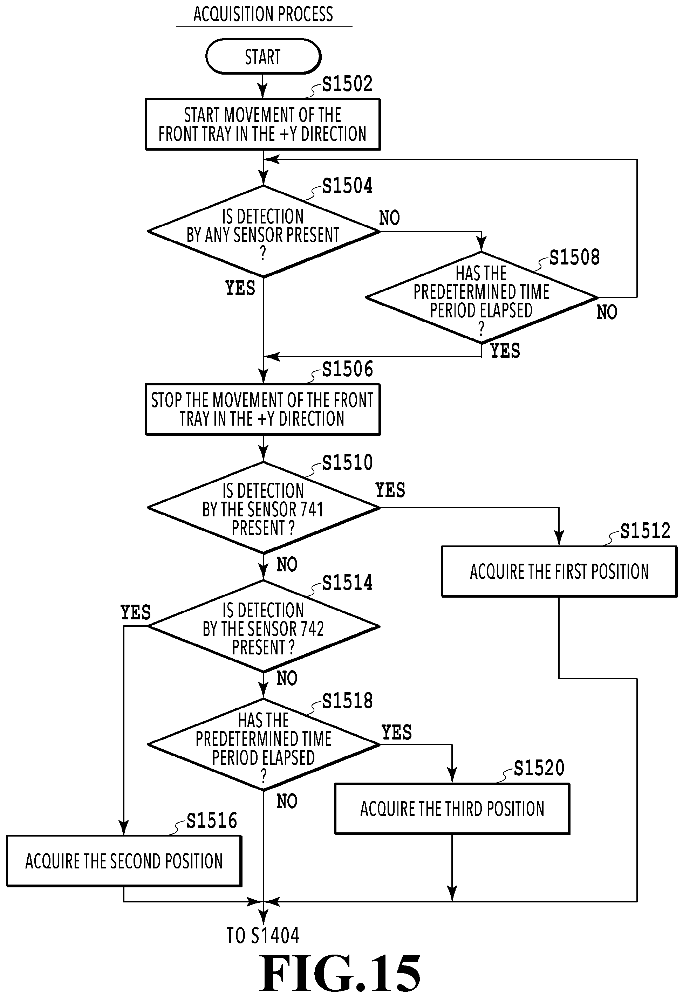

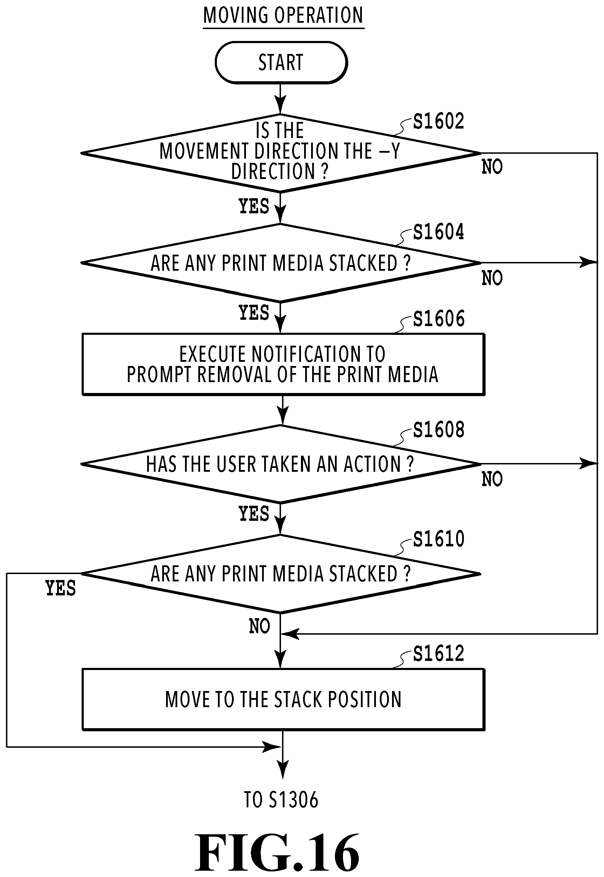

Fig. 13 is a flowchart illustrating details of processing of the print processing to be executed in the printing apparatus. Fig. 14 is a flowchart illustrating the details of processing of a moving process of the front tray 42 to a stack position, which is a subroutine of the print processing of Fig. 13. Fig. 15 is a flowchart illustrating the details of processing of an acquisition process to acquire a position of the front tray 42, which is a subroutine of the moving process. Fig. 16 is a flowchart illustrating the details of processing of a moving operation of the front tray 42, which is a subroutine of the moving process. Fig. 17A to Fig. 17D are diagrams each illustrating a state after the stacking part 4 is moved.

The series of processes illustrated in each flowchart of Fig. 13 to Fig. 16 is performed by the control part 71 loading a program code stored in a program memory (not illustrated in the drawings) of the storage part 72 into a data memory (not illustrated in the drawings) of the storage part 72 and executing it. Alternatively, part or all of the functions in the steps of Fig. 13 to Fig. 16 may be executed by hardware such as an ASIC or an electronic circuit. In the present specification, the sign "S" in the description of each process in a flowchart indicates that it is a step in that flowchart. Note that in the explanation of the print processing using Fig. 13, a case is described in which a bundle of M sheets of print media is treated as one part, and print processing is executed by the printing apparatus 1 based on a job for executing printing to generate N parts of such bundles of print media.

At the time the print processing is started, first, in S1302, the control part 71 executes a moving process in which the front tray 42 is moved to a stack position corresponding to the size of the print medium.

Hereinafter, with reference to Fig. 14, a description is given about the moving process, which is a subroutine of the print processing. At the time the moving process of S1304 is executed, first, in S1402, the control part 71 executes an acquisition process in which the current position of the front tray 42 is acquired.

Hereinafter, with reference to Fig. 15, a detailed description is given about the acquisition process, which is a subroutine of the moving process. At the time the acquisition process of S1402 is executed, first, in S1502, the control part 71 moves the front tray 42 in the +Y direction. In S1502, at the time the movement of the front tray 42 in the +Y direction is started, counting of a time period is started from the point in time at which the movement is started. Next, in S1504, the control part 71 determines whether or not the trigger member 743 has been detected by the sensor 741 or the sensor 742. Note that, in a case where the trigger member 743 is detected by the sensor 741, the control part 71 stores, in the storage part 72, detection information indicating that the trigger member 743 has been detected by the sensor 741. Further, in a case where the trigger member 743 is detected by the sensor 742, the control part 71 stores, in the storage part 72, detection information indicating that the trigger member 743 has been detected by the sensor 742.

In S1504, in a case where it is determined that the trigger member 743 has been detected by the sensor 741 or the sensor 742, the processing proceeds to S1506, where the control part 71 stops the movement of the front tray 42 in the +Y direction, and then the processing proceeds to S1510 described below. Further, in a case where it is determined in S1504 that the trigger member 743 has not been detected by the sensor 741 or the sensor 742, the processing proceeds to S1508, where whether or not a predetermined time period has elapsed since the movement of the front tray 42 in the +Y direction in S1502 is determined.

In S1508, determination is made based on the value of the count started in S1502. The predetermined time period is set to be a time period required for the front tray 42 located at a position where the trigger member 743 does not come into contact with the sensor 741 or 742 to reach the downstream end in the +Y direction. The predetermined time period is, for example, a movement time period from a point in time at which movement of the front tray 42 in the +Y direction is started from a predetermined position (a position at which the front tray 42 is extended by a predetermined amount from the accommodated position) until the front tray 42 reaches the downstream end position in the +Y direction. Therefore, in a case where it is determined in S1508 that the predetermined time period has elapsed, the front tray 42 is located at the downstream end, up to which the front tray 42 can move in the +Y direction. In S1508, in a case where it is determined that the predetermined time period has elapsed, the control part 71 stores, in the storage part 72, detection information indicating that the predetermined time period has elapsed without detection by the sensor 741 or 742 since the front tray 42 is moved in the +Y direction in S1502.

In a case where it is determined in S1508 that the predetermined time period has not elapsed, the processing returns to S1504. Further, in S1508, in a case where it is determined that the predetermined time period has elapsed, the processing proceeds to S1506 described above, where the movement of the front tray 42 is stopped, and then the processing proceeds to S1510 described below.

In S1510, the control part 71 determines whether or not the trigger member 743 has been detected by the sensor 741. In S1510, determination is made based on the detection information stored in the storage part 72. That is, at the point in time where S1510 is executed, one of detection information indicating that the trigger member 743 has been detected by the sensor 741, detection information indicating that the trigger member 743 has been detected by the sensor 742, and detection information indicating that the predetermined time period has elapsed without detection by the sensor 741 or 742 is stored in the storage part 72.

In S1510, in a case where it is determined that the trigger member 743 has been detected by the sensor 741, the processing proceeds to S1512. In S1512, the control part 71 determines that the front tray 42 is located at or near the accommodated position (see Fig. 8A), acquires a first position as the position of the front tray 42, terminates this acquisition process, and then proceeds to S1404 described below. Note that the first position is position information indicating that the front tray 42 is located at or near the accommodated position, that is, located at the upstream end in the +Y direction. In S1512, the acquired first position is stored in the storage part 72 as position information of the front tray 42. At this time, the detection information stored in the storage part 72 is initialized. Further, in S1510, in a case where it is determined that the trigger member 743 has not been detected by the sensor 741, the processing proceeds to S1514, where the control part 71 determines whether or not the trigger member 743 has been detected by the sensor 742. In S1512, as in S1510, determination is made based on the detection information stored in the storage part 72.

In S1514, in a case where it is determined that the trigger member 743 has been detected by the sensor 742, the processing proceeds to S1516. In S1516, the control part 71 determines that the front tray 42 is located at a predetermined position where the front tray 42 is extended by a predetermined amount from the accommodated position (see Fig. 8B), acquires a second position as the position of the front tray 42, terminates this acquisition process, and then proceeds to S1404 described below. Note that the second position is position information indicating that the front tray 42 is located at a predetermined position where the front tray 42 is extended by a predetermined amount from the accommodated position, that is, located on the downstream side relative to the first position and on the upstream side relative to the later-described third position in the +Y direction. In S1516, the acquired second position is stored in the storage part 72 as position information of the front tray 42. At this time, the detection information stored in the storage part 72 is initialized. Further, in S1514, in a case where it is determined that the trigger member 743 has not been detected by the sensor 742, the processing proceeds to S1518, where whether or not the predetermined time period has elapsed without detection by the sensor 741 or 742 is determined. In S1518, as in S1510, etc., determination is made based on the detection information stored in the storage part 72.

In S1518, in a case where it is determined that the predetermined time period has elapsed without detection by the sensor 741 or 742, the processing proceeds to S1520. In S1520, the control part 71 determines that the front tray 42 is located at the downstream end up to which the front tray 42 can move in the +Y direction (see Fig. 8C), acquires a third position as the position of the front tray 42, terminates this acquisition process, and then proceeds to S1404 described below. Note that the third position is position information indicating that the front tray 42 is located at the downstream end up to which the front tray 42 can move in the +Y direction. In S1520, the acquired third position is stored in the storage part 72 as position information of the front tray 42. At this time, the detection information stored in the storage part 72 is initialized. Further, in S1518, in a case where it is determined that the predetermined time period has not elapsed without detection by the sensor 741 or 742, this acquisition process is terminated, and then the processing proceeds to S1404 described below.

That is, in this acquisition process, by using the two sensors 741 and 742 and the trigger member 743 and moving the front tray 42 in the +Y direction, the position of the front tray 42 in the Y direction can be acquired from three roughly set positions. Therefore, in the acquisition process, the position of the front tray 42 is acquired without moving the front tray 42 in the -Y direction, which may damage the print media stacked in the stacking part 4. As described above, in the present embodiment, the control part 71 controls movement of the front tray 42 in the Y direction and functions as an acquisition part that acquires the position of the front tray 42 based on a detection result of the position detection part 74.

Returning to Fig. 14, the description is continued. At the time the acquisition process of S1402 is finished, next, in S1404, the control part 71 determines whether or not position information of the front tray 42 has been acquired. In S1404, determination is made based on the position information stored in the storage part 72. That is, in S1404, in a case where the first position, the second position, or the third position is stored in the storage part 72 as the position information of the front tray 42, it is determined that the position information of the front tray 42 has been acquired. Further, in S1404, in a case where it is determined that position information of the front tray 42 is not stored in the storage part 72, it is determined that position information of the front tray 42 has not been acquired.

In S1404, in a case where it is determined that position information of the front tray 42 has not been acquired, the processing proceeds to S1406. In S1406, the control part 71 determines that an error has occurred in the storage part 72 or the sensor 741 or 742, and provides an error notification to the user, for example, via the operation part 8, and then terminates this acquisition process, thereby terminating the print processing. Further, in S1404, in a case where it is determined that position information of the front tray 42 has been acquired, the processing proceeds to S1408. In S1408, based on the position information acquired in the acquisition process of S 1402 and information related to the size of the print medium set in the job, the control part 71 executes a moving operation in which the front tray 42 is moved to a stack position corresponding to the size of the print medium.

Hereinafter, with reference to Fig. 16, a detailed description is given about the moving operation, which is a subroutine of the moving process. At the time the moving operation of S1408 is started, first, in S1602, the control part 71 determines whether or not the moving direction in which the front tray 42 moves to the stack position corresponding to the size of the print medium is the -Y direction. In S1408, based on the position information of the front tray 42 acquired by the acquisition process and the information related to the size of the print medium set in the job, whether or not the moving direction of the front tray 42 is the -Y direction is determined.

For example, in a case where the position based on the position information of the front tray 42 acquired by the acquisition process is located on the upstream side in the +Y direction relative to the stack position associated with the information related to the size of the print medium, it is necessary to move the front tray 42 in the +Y direction. Further, in a case where the position based on the position information of the front tray 42 acquired by the acquisition process is located at the same position as the stack position associated with the information related to the size of the print medium, there is no need to move the front tray 42 in the Y direction. Therefore, in these cases, it is determined in S1408 that the moving direction of the front tray 42 is not the -Y direction. Further, in a case where the position based on the position information of the front tray 42 acquired by the acquisition process is located on the downstream side in the +Y direction relative to the stack position associated with the information related to the size of the print medium, it is necessary to move the front tray 42 in the -Y direction. Therefore, in this case, it is determined in S1408 that the moving direction of the front tray 42 is the -Y direction.

In S1602, in a case where it is determined that the moving direction of the front tray 42 is not the -Y direction, the processing proceeds to S1612 described later. Further, in S1602, in a case where it is determined that the moving direction of the front tray 42 is the -Y direction, the processing proceeds to S1604, where the control part 71 determines whether or not a print medium is stacked on the stacking part 4. In S1604, determination is made based on a detection result of the sensor 731.

In S1604, in a case where it is determined that a print medium is not stacked on the stacking part 4, the processing proceeds to S1612 described later. Further, in S1604, in a case where it is determined that a print medium is stacked on the stacking part 4, the processing proceeds to S1606, where the control part 71 provides, via the operation part 8, a notification to prompt the user to remove the print medium stacked on the stacking part 4. As a specific notification method, for example, a comment or an image reflecting the above-described notification may be displayed on the display panel 82, or voice guidance reflecting the above-described notification may be output via a speaker (not illustrated in the drawings) installed in the operation part 8. Thus, in the present embodiment, movement of the front tray 42 in the -Y direction is restricted in a case where a print medium is stacked on the stacking part 4 and the stack position corresponding to the size of a print medium to be used for subsequent printing is located on the upstream side in the +Y direction relative to the position of the front tray 42 acquired in the acquisition process. Further, in the present embodiment, the control part 71 functions as a notification part that provides a notification to prompt removal of a print medium stacked on the stacking part 4.

Next, in S1608, the control part 71 determines whether or not the user has executed an action in response to the notification provided in S1606. In the present embodiment, for example, in S1606, together with the above-described notification, an end button for confirming that an action by the user has been completed and a continue button for forcibly proceeding the processing are displayed. Then, in S1608, in a case where the end button or the continue button is pressed, it is determined that the user has taken an action in response to the above-described notification, and in a case where the end button and the continue button are not pressed, it is determined that the user has not taken an action in response to the above-described notification.

In S1608, in a case where it is determined that the user has not taken an action in response to the above-described notification, the processing returns to S1608 again. Note that, in a case where determination that the user has not taken an action is repeated for a predetermined period of time, an error notification may be provided to the user. Further, in S1608, in a case where it is determined that the user has taken an action in response to the above-described notification, the processing proceeds to S1610, where the control part 71 determines again whether or not a print medium is stacked on the stacking part 4. Since the specific details of processing of S1610 are the same as those of S1604 described above, the detailed description thereof is omitted.

In S1610, in a case where it is determined that a print medium is stacked on the stacking part 4, the present moving operation is terminated, assuming that the continue button for forcibly proceeding the processing has been selected in S1608, thereby terminating the print processing. Further, in S1610, in a case where it is determined that a print medium is not stacked on the stacking part 4, it is determined that an action by the user has been appropriately taken, and the processing proceeds to S1612. Thus, even in a case where a print medium is stacked on the stacking part 4 and the stack position corresponding to the size of a print medium is located on the upstream side in the +Y direction relative to the position of the front tray 42 acquired in the acquisition process, movement of the front tray 42 in the -Y direction is permitted by removal of the print medium from the stacking part 4.

In S1612, the control part 71 moves the front tray 42 to the stack position corresponding to the size of the print medium to be used for subsequent printing (see Fig. 17A), terminates the moving process together with this moving operation, and proceeds to S1306 described later. In S1612, the stack position is determined based on a detection result of a sensor installed in the detection part 73 to detect the position of the stacking part 4 after a predetermined operation. Specifically, for example, based on a detection result of the rotary encoder of the drive source 44, the front tray 42 is moved to the stack position corresponding to the size of a print medium. Alternatively, it is also possible to adopt a configuration in which the front tray 42 is moved to the stack position corresponding to the size of a print media based on a detection result of a mechanical switch, a photo sensor, or the like.

That is, in this moving operation, whether or not the moving direction of the front tray 42 is the -Y direction is determined, based on the position of the front tray 42 in the stacking part 4 and the stack position corresponding to the size of the print medium to be used for subsequent printing. Further, in a case where the moving direction is the -Y direction, since there is a possibility to damage a print medium stacked on the stacking part 4, presence or absence of a print medium on the stacking part 4 is determined, and in a case where a print medium is stacked on the stacking part 4, the user is prompted to take an action. Accordingly, even if a print medium is stacked on the stacking part 4, damage to the print medium is less likely to occur even though the front tray 42 is moved to the stack position corresponding to the size of the print medium to be used for subsequent printing.

Returning to Fig. 13, the description is continued. At the time the moving process of S1302 ends, next, in S1304, the control part 71 moves the rear tray 41 and the front tray 42 (the stacking part 4) to the first sorting position. In S1302, the drive source 44 is rotated in the first direction to move the rear tray 41 and the front tray 42 in the -X direction to the first sorting position.

Note that, in a case where, during the moving process of S1302, the front tray 42 located at the accommodated position is moved to the stack position corresponding to the size of a print medium, the stacking part 4 has already been located at the first sorting position. Further, also in a case where, during the moving process of S1302, the front tray 42 is moved in the +Y direction, thereby being moved to the stack position corresponding to the size of a print medium, the stacking part 4 has already been located at the first sorting position.

That is, at the time the front tray 42 is moved in the +Y direction, the rear tray 41 and the front tray 42 are moved to the first sorting position, and then the drive source 44 is further rotated in the first direction. Note that the drive transmission part 43 is formed such that, in a state where the rear tray 41 is at the first sorting position, the cam 4312 does not rotate any further even if the driving force resulting from the rotation of the drive source 44 in the first direction is transmitted. Therefore, even if the drive source 44 rotates in the first direction in the state where the rear tray 41 and the front tray 42 are at the first sorting position, the rear tray 41 and the front tray 42 do not move in the -X direction from the first sorting position.

Accordingly, in these cases, for example, it is also possible to adopt a configuration in which whether the stacking part 4 is located at the first sorting position or the second sorting position can be determined by use of a sensor or the like, thereby omitting the process of S1304 in a case where the stacking part 4 is located at the first sorting position. Note that, in a case where, during the moving process of S1302, the front tray 42 is moved in the -Y direction, thereby being moved to the stack position corresponding to the size of a print medium, since the stacking part 4 is located at the second sorting position, the stacking part 4 is moved to the first sorting position by the process of S1304.

Next, in S1306, the control part 71 sets the variable n, which indicates the part number of the bundle of print media to be sorted, to "1." Further, in S1308, the control part 71 sets the variable m, which indicates the sheet number of the print medium to be printed, to "1." Then, in S1310, the control part 71 performs printing on the m-th sheet of the n-th part of the print media. In the printing part 10, a printing operation is performed in which ink is ejected while the print head 3 is moved in the X direction with respect to a predetermined area of the print media conveyed by the conveyance part 2 and supported by the platen 25. Next, after performing a conveyance operation in which the conveyance part 2 conveys the print medium by a predetermined amount corresponding to the Y-direction length of the predetermined area, the printing operation is executed again. In this way, the printing part 10 performs printing on the print medium by alternately and repeatedly executing the printing operation and the conveyance operation. Therefore, the print medium is conveyed in the +Y direction during printing as the printing progresses, discharged at the end of the printing, and then stacked onto the stacking part 4 at the first sorting position.

Then, in S1312, the control part 71 determines whether or not the print medium has been discharged. In S1312, for example, determination is made based on a detection result of a sensor installed in the detection part 73 to detect the discharge of a print medium, and the number of discharged print media is counted. The discharged print media are stacked onto the stacking part 4 at the first sorting position (see Fig. 17B).

Thereafter, in S1314, the control part 71 determines whether or not the discharged print media have reached the predetermined number of sheets. In S1314, whether or not the count of the discharged print media has reached the predetermined number of sheets, which is set in advance, is to be determined. Alternatively, in S1314, it is also possible to determine whether or not the sheet number m has reached the predetermined sheet number. In this case, in S1312, the count of the number of discharged print media is not performed. The predetermined sheet number is set based on information set in a job, for example. That is, in the present embodiment, the predetermined sheet number is "M," and in S1314, whether or not m = M is to be determined.

In S1314, if it is determined that the discharged print media have not reached the predetermined number of sheets, the processing proceeds to S1316, where the control part 71 increments m, and the processing returns to S1310. Further, in S1314, if it is determined that the discharged print media have reached the predetermined number of sheets, the processing proceeds to S1318, where the control part 71 determines whether or not the part number n has reached a predetermined part number. The predetermined part number is set based on information set in a job, for example. That is, in the present embodiment, the predetermined part number is "N", and in S1318, whether or not n = N is to be determined.

In S1318, if it is determined that the part number n has reached the predetermined part number, the processing proceeds to S1320, where the control part 71 determines whether or not the print media have been removed from the stacking part 4. In S1320, determination is made based on a detection result of the sensor 731. In S1320, in a case where it is determined that the print media have not been removed from the stacking part 4, the processing proceeds to S1322, where the control part 71 determines whether or not a next job has been input. In a case where it is determined in S1322 that the next job has been input, the present print processing ends. Thereafter, new print processing is started based on the next job that has been input. Further, in a case where it is determined in S1322 that the next job has not been input, the processing returns to S1320. At this time, it is also possible to provide, via the display panel 82 of the operation part 8, a notification to prompt the user to remove the print media from the stacking part 4.

Further, in S1320, if it is determined that the print media have been removed from the stacking part 4, the processing proceeds to S1324, where the rear tray 41 and the front tray 42 are moved to the second sorting position. In S1324, the drive source 44 is rotated in the second direction to move the rear tray 41 and the front tray 42, which are at the first sorting position, in the +X direction to the second sorting position, and then the processing proceeds to S1350 described later.

Further, in S1318, if it is determined that the part number n has not reached the predetermined part number, the processing proceeds to S1326, where the control part 71 moves the rear tray 41 and the front tray 42 to the second sorting position (see Fig. 17C). Since the specific details of processing of S1326 are the same as those of S1324 described above, the detailed description thereof is omitted.

Next, in S1328, the control part 71 increments the variable n. Further, in S1330, the control part 71 sets the variable m to "1." Then, in S1332, the control part 71 performs printing on the m-th sheet of the n-th part of the print media. The print medium is conveyed in the +Y direction during printing as the printing progresses, discharged at the end of the printing, and then stacked onto the stacking part 4 at the second sorting position. Then, in S1334, the control part 71 determines whether or not the print medium has been discharged. Note that the herein-discharged print medium is to be stacked onto the print media stacked in the stacking part 4 at the first sorting position, i.e., to be stacked at a position offset in the X direction relative to the print media stacked at the first sorting position (see Fig. 17D).

Thereafter, in S1336, the control part 71 determines whether or not the discharged print media have reached the predetermined number of sheets. In S1336, if it is determined that the discharged print media have not reached the predetermined number of sheets, the processing proceeds to S1338, where the control part 71 increments m, and the processing returns to S1332. Further, in S1336, if it is determined that the discharged print media have reached the predetermined number of sheets, the processing proceeds to S1340, where the control part 71 determines whether or not the part number n has reached a predetermined part number. Note that, since the specific details of processing of S1334 through S1340 described above are the same as those of S1312 through S1318 described above, the detailed descriptions thereof are omitted.

In S1340, if it is determined that the part number n has not reached the predetermined part number, the processing proceeds to S1342, where the control part 71 increments n. Then, in S1344, the control part 71 moves the rear tray 41 and the front tray 42 to the first sorting position, and the processing returns to S1308. In S1344, the drive source 44 is rotated in the first direction to move the rear tray 41 and the front tray 42, which are at the second sorting position, in the -X direction to the first sorting position.

Further, in S1340, if it is determined that the part number n has reached the predetermined part number, the processing proceeds to S1346, where the control part 71 determines whether or not the print media have been removed from the stacking part 4. Since the specific details of processing of S1346 are the same as those of S1320 described above, the detailed description thereof is omitted. In S1346, in a case where it is determined that the print medium has not been removed from the stacking part 4, the processing proceeds to S1348, where the control part 71 determines whether or not a next job has been input. In a case where it is determined in S1348 that the next job has been input, the present processing ends. Thereafter, new print processing is started based on the next job that has been input. Further, in a case where it is determined in S1348 that the next job has not been input, the processing returns to S1346. At this time, it is also possible to provide, via the display panel 82 of the operation part 8, a notification to prompt the user to remove the print media from the stacking part 4.

Further, in S1346, if it is determined that the print media have been removed from the stacking part 4, the processing proceeds to S1350, where the control part 71 moves the front tray 42 from the stack position to the accommodated position, and ends this print processing. Note that, at the time the print processing is ended, for example, the rear tray 41 and the front tray 42 located at the accommodated position are moved to the initial position at which the center position Os of the stacking part 4 overlaps the center position Om of print media to be discharged.

In S1350, in the state where the rear tray 41 and the front tray 42 are at the second sorting position, the drive source 44 is further rotated in the second direction, thereby moving the front tray 42 in the -Y direction from the stack position to the accommodated position. Note that the drive transmission part 43 is formed such that, in a state where the rear tray 41 is at the second sorting position, the cam 4312 does not rotate any further even if the driving force resulting from the rotation of the drive source 44 in the second direction is transmitted. Therefore, in S1246, even if the drive source 44 rotates in the second direction in the state where the rear tray 41 and the front tray 42 are at the second sorting position, the rear tray 41 and the front tray 42 do not move in the +X direction from the second sorting position.

### (Functional Effect)

As described above, in the printing apparatus 1, a plurality of sensors is installed along the Y direction, which is the moving direction of the front tray, and a trigger member capable of performing detection by use of the sensors is installed on the front tray. Further, before the front tray is moved to a stack position at the start of printing, the front tray is moved in the +Y direction, thereby acquiring a rough position of the front tray in the Y direction.

Accordingly, in the printing apparatus 1, at the time of detecting a position of the front tray, the front tray is moved only in the direction in which the stacking surface for print media expands. Therefore, even in a case where a print medium is stacked on the stacking part, which includes the front tray, position information of the front tray can be acquired without causing damage to the print medium.

Further, in a case where the stack position corresponding to the size of the print medium to be used for the subsequent printing is located on the downstream side in the +Y direction compared with the acquired position information, the front tray is moved to a stack position based on the position information and the size. On the other hand, in a case where the stack position corresponding to the size of the print medium to be used for the subsequent printing is located on the upstream side in the +Y direction compared with the acquired position information, if a print medium is stacked on the stacking part, the user is prompted to remove the print medium, and thereafter, the front tray is moved to that stack position.

Accordingly, in the printing apparatus 1, even in a case where a print medium is stacked on the stacking part, the front tray can be moved to a stack position corresponding to the size of the print medium to be used for the subsequent printing without causing damage to the print medium.

### <<Second Embodiment>>

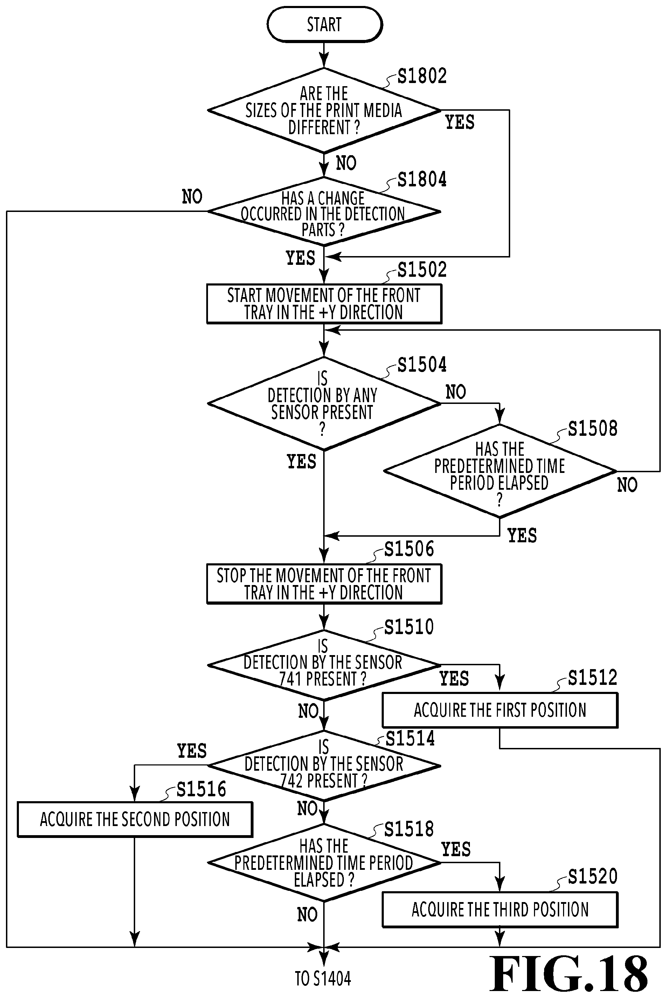

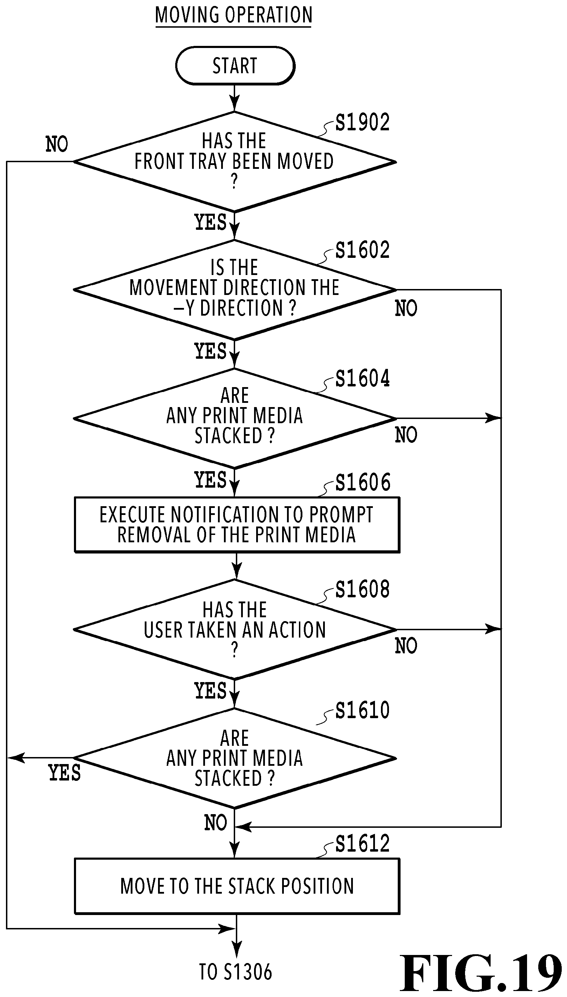

Next, with reference to Fig. 18 and Fig. 19, a description is given about the printing apparatus according to the second embodiment. In the following description, configurations that are the same or equivalent to those of the printing apparatus according to the above-described first embodiment are assigned the same signs as those used in the above-described first embodiment, thereby omitting detailed descriptions thereof.

The second embodiment differs from the above-described first embodiment in that, as necessary, the front tray 42 is moved in the +Y direction, and a position of the front tray is detected. Hereinafter, a detailed description is given about an acquisition process and a moving process executed by the printing apparatus 1 according to the second embodiment.

### (Acquisition Process)

First, a description is given about an acquisition process, which is a subroutine of a moving process in which, at the start of printing, the front tray 42 is moved to a stack position corresponding to the size of a print medium to be used for subsequent printing. Fig. 18 is a flowchart illustrating the details of processing of the acquisition process executed by the printing apparatus 1 according to the present embodiment. The series of processes illustrated in the flowchart of Fig. 18 is performed by the control part 71 loading a program code stored in a program memory (not illustrated in the drawings) of the storage part 72 into a data memory (not illustrated in the drawings) of the storage part 72 and executing it. Alternatively, part or all of the functions in the steps of Fig. 18 may be executed by hardware such as an ASIC or an electronic circuit. Note that, in the flowchart of Fig. 18, the steps in which the same processes as in the acquisition process in the above-described first embodiment are performed are denoted by the same step numbers, thereby omitting detailed descriptions thereof.

At the time the acquisition process in S1402 of the moving process is started, first, in S1802, the control part 71 determines whether or not the size of the print medium to be used for the printing based on the current job is different from the size of the print medium used for the printing based on the previous job. For example, the size of the print medium used for the printing based on the previous job can be acquired by referring to a print history stored in the storage part 72.

In S1802, in a case where it is determined that the size of the print medium to be used for the printing based on the current job is different from the size of the print medium used for the printing based on the previous job, the processing proceeds to S1502. Further, in S1802, in a case where it is determined that the size of the print medium to be used for the printing based on the current job is the same as the size of the print medium used for the printing based on the previous job, the processing proceeds to S1804.

In S1804, the control part 71 determines whether or not a change has occurred in the position detection part 74 and the detection part 73. That is, in S1804, whether or not a change has occurred in the detection results of the trigger member 743 obtained by the sensors 741 and 742 and in the detection result obtained by the rotary encoder of the drive source 44, from the point in time at which the print processing for performing printing based on the previous job is completed, is determined. Note that, in the printing apparatus 1, at the end of print processing, detection results obtained by the sensors 741 and 742 and a detection result obtained by the rotary encoder of the drive source 44 are acquired and stored in the storage part 72.

In S1804, in a case where it is determined that no change has occurred in the position detection part 74 and the detection part 73, the acquisition process is ended, and the processing proceeds to S1404. That is, in a case where it is determined that no change has occurred in the position detection part 74 and the detection part 73, the position of the front tray 42 is the same as the position at the end of the print processing for performing the printing based on the previous job, and thus it is determined that there is no need to newly acquire the position of the front tray 42. Further, in S1804, in a case where it is determined that a change has occurred in the position detection part 74 and the detection part 73, the processing proceeds to S1502, so that the processes in and after S1504 are executed, thereby acquiring the position of the front tray 42.

### (Moving Operation)

Next, a description is given about the moving operation, which is a subroutine of the moving process. Fig. 19 is a flowchart illustrating the details of processing of the moving operation executed by the printing apparatus 1 according to the present embodiment. The series of processes illustrated in the flowchart of Fig. 19 is performed by the control part 71 loading a program code stored in a program memory (not illustrated in the drawings) of the storage part 72 into a data memory (not illustrated in the drawings) of the storage part 72 and executing it. Alternatively, part or all of the functions in the steps of Fig. 19 may be executed by hardware such as an ASIC or an electronic circuit. Note that, in Fig. 19, the steps in which the same processes as in the moving operation in the above-described first embodiment are performed are denoted by the same step numbers, thereby omitting detailed descriptions thereof.

At the time the moving operation in S1406 of the moving process is started, first, in S1902, the control part 71 determines whether or not the front tray 42 has been moved in the acquisition process. That is, if the position of the front tray 42 is acquired in the acquisition process executed in S1402 of the moving process, it is determined that the front tray 42 has been moved, and if it is determined that the position of the front tray 42 is not acquired in the acquisition process, it is determined that the front tray 42 has not been moved.

In S1902, if it is determined that the front tray 42 has not been moved in the acquisition process, the moving operation is ended without moving the front tray 42, thereby ending the moving process. Further, in S1902, if it is determined that the front tray 42 has been moved in the acquisition process, the processing proceeds to S1602, so that the processes in and after S 1602 are executed, thereby moving the front tray 42 to a stack position corresponding to the size of a print medium.

### (Functional Effect)

As described above, in the present embodiment, in the acquisition process, in a case of using a print medium having the same size as the print medium used in the previous printing, the position of the front tray 42 is not acquired, and in the moving operation, movement of the front tray 42 is not executed. Accordingly, in addition to the functional effect of the above-described first embodiment, a functional effect in which the time period required for print processing is shortened, as compared with the first embodiment in which the position of the front tray 42 is detected every time and the front tray 42 is moved based on the detection results and the like, is achieved.

Note that, in the printing apparatus 1, during the time the front tray 42 is located at a stack position, the front tray 42 is in a state of protruding to the outside of the housing 9. Therefore, the front tray 42 may be moved due to unintended contact by the user or the like. In the present embodiment, in S1804 of the acquisition process, whether or not a change has occurred in the detection part 73 and the position detection part 74 after completion of the previous print processing is determined. Therefore, even in a case where the front tray 42 has been moved due to contact by the user or the like after completion of previous print processing, the front tray 42 can be reliably moved to a stack position corresponding to the size of the print medium to be used for subsequent printing.

### <<Other Embodiments>>

Note that the above-described embodiments may be modified as shown in the following (1) through (4).
(1) In the above-described embodiments, the two sensors 741 and 742 are included in the position detection part 74, and, based on detection results of the trigger member 743 obtained by these sensors, an approximate position of the front tray 42 is determined from three locations; however, there is no such limitation. For example, three or more sensors capable of detecting the trigger member 743 may be installed, and an approximate position of the front tray 42 may be determined from four or more locations.
(2) In the above-described embodiments, a position of the front tray 42 is acquired by use of the two sensors 741 and 742 and the trigger member 743; however, the configuration for acquiring the position is not limited thereto. For example, the position of the front tray 42 may be acquired by an encoder. In this case, for example, a scale is arranged on a side surface of the front tray 42, and a detector for detecting position information is arranged inside the housing 9.
(3) Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.
(4) The above-described embodiments and the various forms shown in (1) through (3) may be combined as appropriate.

Various embodiments have been described in detail above but it will be understood that the present disclosure is not limited to these embodiments and encompasses all modifications, variants, alternatives and equivalents falling within the scope of the appended claims.

## Claims

1. A printing apparatus (1) comprising:
a printing unit (3) configured to perform printing on a conveyed print medium;
a stacking unit (4) configured to be capable of stacking the print medium conveyed and discharged, by use of a first stacking part (41) and a second stacking part (42) installed to be movable in a first direction relative to the first stacking part (41);
a first detection unit (74) configured to be capable of detecting a position of the second stacking part (42) by movement of the second stacking part (42) in the first direction; and
an acquisition unit (71) configured to control the movement of the second stacking part (42) in the first direction and acquire the position of the second stacking part (42) based on a detection result obtained by the first detection unit (74),
wherein the first direction includes an extending direction in which the stacking unit (4) extends and a contracting direction in which the extended stacking unit (4) contracts, and
wherein the acquisition unit (71) is configured to acquire the position of the second stacking part (42) at a start of printing by the printing unit (3), in accordance with the detection result obtained by the first detection unit (74) while the second stacking part (42) is moved in the extending direction of the first direction.

2. The printing apparatus according to claim 1,
wherein the first detection unit includes a trigger member and a plurality of sensors, the trigger member being installed on the second stacking part, and the plurality of sensors being capable of detecting the trigger member and installed along the first direction, and
wherein the acquisition unit is configured to acquire the position of the second stacking part in accordance with the position of any one of the sensors that has detected the trigger member.

3. The printing apparatus according to claim 1,
wherein the first detection unit is an encoder including a scale installed on the second stacking part and a detector configured to detect the scale.

4. The printing apparatus according to any one of claims 1 to 3,
wherein the second stacking part is movable between an accommodated position, in which the second stacking part is accommodated in the first stacking part, and a stack position, in which the second stacking part cooperates with the first stacking part to be capable of stacking the print medium, the stack position corresponding to the size of the print medium to be stacked.

5. The printing apparatus according to claim 4, further comprising
a second detection unit configured to be capable of detecting the print medium stacked on the stacking unit,
wherein movement of the second stacking part in the contracting direction is restricted in a case where the print medium is stacked on the stacking unit and the stack position corresponding to the size of a print medium to be used for the printing to be started is located on the upstream side in the extending direction relative to the position of the second stacking part detected by the first detection unit.

6. The printing apparatus according to claim 4, further comprising:
a second detection unit configured to be capable of detecting the print medium stacked on the stacking unit; and
a notification unit configured to provide a notification that prompts removal of the print medium stacked on the stacking unit in a case where the print medium is stacked on the stacking unit and the stack position corresponding to the size of a print medium to be used for the printing to be started is located on the upstream side in the extending direction relative to the position of the second stacking part detected by the first detection unit.

7. The printing apparatus according to claim 4,
wherein the second stacking part is configured such that, in a case where the size of a print medium to be used for first printing to be started is the same as the size of a print medium used for second printing executed prior to the first printing and there is no change in the position of the second stacking part after the end of the second printing, the second stacking part does not execute the movement to the stack position corresponding to the size of the print medium to be used for the first printing.

8. The printing apparatus according to any one of claims 1 to 7,
wherein the first stacking part is movable, together with the second stacking part, between a first position located on one side of a second direction intersecting the first direction and a second position located on the other side of the second direction, and
wherein the stacking unit is configured to stack the print medium at the first position and the second position.

9. A control method of a printing apparatus (1) including
a printing unit (3) configured to perform printing on a conveyed print medium, a stacking unit (4) configured to be capable of stacking the print medium conveyed and discharged, by use of a first stacking part (41) and a second stacking part (42) installed to be movable in a first direction relative to the first stacking part (41), and
a detection unit (74) configured to be capable of detecting a position of the second stacking part (42) by movement of the second stacking part (42) in the first direction,
wherein the first direction includes an extending direction in which the stacking unit (4) extends and a contracting direction in which the extended stacking unit (4) contracts,
the control method comprising
acquiring the position of the second stacking part (42) at a start of printing, in accordance with a detection result obtained by the detection unit (72) while the second stacking part (42) is moved in the extending direction of the first direction.

10. A program for causing a computer to execute the control method according to claim 9.
